# EUROPEAN PATENT SPECIFICATION

(11) **EP 3 747 683 B1**
(45) Date of publication and mention of the grant of the patent: **11.10.2023**
(21) Application number: 20760362.2
(22) Date of filing: 25.02.2020
(51) Int. Cl.: B60L 3/04, B61C 17/12, H02J 3/00, B61C 17/00, B60L 3/00

(54) **MEDIUM-VOLTAGE ALTERNATING CURRENT BUS CONTROL METHOD AND SYSTEM**
VERFAHREN UND SYSTEM ZUR STEUERUNG EINES WECHSELSTROM-MITTELSPANNUNGSBUSSES
PROCÉDÉ ET SYSTÈME DE COMMANDE DE BUS DE COURANT ALTERNATIF MOYENNE TENSION

(30) Priority: 26.02.2019 CN 201910141420
(43) Date of publication of application: 09.12.2020
(73) Proprietor: CRRC Changchun Railway Vehicles Co., Ltd., Changchun, Jilin 130000 (CN)
(72) Inventor: LV, Long, Changchun, Jilin 130000 (CN); REN, Xiangchen, Changchun, Jilin 130000 (CN); ZHENG, Hengliang, Changchun, Jilin 130000 (CN); MA, Xiaoming, Changchun, Jilin 130000 (CN); LIU, Changyuan, Changchun, Jilin 130000 (CN)
(74) Representative: Herrmann, Uwe
(86) International application number: PCT/CN2020/076619
(87) International publication number: WO 2020/173434

(56) References cited:
- CN-A- 105 501 065
- CN-A- 105 501 065
- CN-A- 105 501 065
- CN-A- 106 740 126
- CN-A- 106 740 126
- CN-A- 109 878 333
- CN-U- 202 080 152
- CN-U- 202 080 152
- CN-U- 202 080 152
- JP-A- 2004 364 412
- US-B2- 10 132 850

## Description

The present application claims priority to Chinese Patent Application No. 201910141420.4, titled "METHOD AND SYSTEM FOR CONTROLLING MEDIUM VOLTAGE ALTERNATING CURRENT BUS", filed on February 26, 2019 with the Chinese Patent Office.

### FIELD

The present disclosure relates to the technical field of railway vehicles, and in particular to a method and a system for controlling a medium voltage alternating current bus.

### BACKGROUND

A high-speed multiple-unit train refers to a multiple-unit train with a design speed more than 300km/h, which normally has an operating speed more than 250km/h, belonging to a high level of high-speed trains. The high-speed multiple-unit train can meet transportation demands of long distance, large capacity, high density, and short travel time.

An alternating current load in a high-speed multiple-unit train is powered by a medium voltage alternating current bus. In general, multiple traction auxiliary converters in a carriage group in the high-speed multiple-unit train are electrically connected via vehicle power boxes or external power supply boxes, to form the medium voltage alternating current bus of the carriage group.

At present, the medium voltage alternating current bus of the high-speed multiple-unit train is divided into a few of sections. Generally, a circuit breaker is arranged in the middle of the medium voltage alternating current bus to divide the entire medium voltage alternating current bus into two sections. In a case that one of the two sections of the medium voltage alternating current bus has a fault, the circuit breaker is opened to ensure that the medium voltage alternating current bus in a half of the high-speed multiple-unit train continues to supply power normally.

The above method has advantages of simple circuit design and simple software control strategy, which is easy to be implemented. However, with the simple division of the medium voltage alternating current bus, the power of the auxiliary power supply system of a half train may be lost due to a fault in any section. In a case that the two sections of the medium voltage alternating current bus both have a fault, the power of the auxiliary power supply of the entire train may be lost, and the train has to stop and wait for rescue. CN105501065A provides an auxiliary power supply system for a subway vehicle. The system is connected to a high voltage bus via an input end of a first auxiliary inverter, an input end of a second auxiliary inverter, an input end of a third auxiliary inverter and an input end of a fourth auxiliary inverter. An output end of the first auxiliary inverter is connected to a first end of a first breaker. An output end of the second auxiliary inverter is connected to a first end of a second breaker. A second end of the second breaker is connected to a second end of the first breaker, a second end of a third breaker and a second end of a fourth breaker. A first end of the third breaker is connected to an output end of the third auxiliary inverter. A first end of the fourth breaker is connected to an output end of the fourth auxiliary inverter. When one of the auxiliary inverters on a train fails, the system can be operated without load reduction, and the comfort level of passengers in carriages can be guaranteed. CN106740126A provides a control method for medium voltage loads in a motor train unit. The control method includes: sending a starting request when any medium voltage load requires starting, and judging whether a starting request for one medium-voltage load is sent currently in real time after a medium voltage bus bar is established; ranking all medium voltage loads on the bus bar in the motor train unit according to importance degrees. By adopting the control method, the medium voltage loads are allocated reasonable, and a part of medium voltage loads are omitted when auxiliary capacity is insufficient, so that full utilization of the auxiliary capacity is ensured, and the auxiliary overload failure is avoided at the same time. CN202080152 discloses an auxiliary power supply device for vehicles, which comprises auxiliary power supplies, auxiliary inverter power boxes, power supply bus bars and at least one isolated three-phase AC contactor installed on the power supply bus bars, wherein the auxiliary inverter power boxes are installed in at least two compartments, the auxiliary inverter power box in each compartment comprises two auxiliary power supplies which form synchronization with the power supply bus bars to supply power to the train load, and the isolated three-phase AC contactor is in a close state during the normal operation of the device. Through the use of the auxiliary power supply device, the impact of the fault of a single auxiliary inverter power supply on the auxiliary power supply of an entire train in centralized power supply is avoided, the technical shortcomings of high failure rate and increased train weight in distributed power supply are overcome, and the performances of an auxiliary power supply system and the entire vehicle are optimized.

### SUMMARY

In order to solve the above technical problems, a method and a system for controlling a medium voltage alternating current bus are provided according to the present disclosure, to reduce an impact on an entire high-speed multiple-unit train due to a short-circuit fault in the medium voltage alternating current bus.

In order to achieve the above technical object, the following technical solutions are provided according to embodiments of the present disclosure.

A method for controlling a medium voltage alternating current bus is provided. The method is applied to an auxiliary power supply system of a high-speed multiple-unit train. The high-speed multiple-unit train includes at least one carriage group each including eight carriages. The auxiliary power supply system includes multiple traction auxiliary converters arranged in different carriages and multiple circuit breakers connected between the multiple traction auxiliary converters. The multiple traction auxiliary converters form an entire medium voltage alternating current bus, which is divided into multiple medium voltage alternating current sub-buses by the multiple circuit breakers. The method includes the following steps S101 to S106.

In step S101, it is determined whether the bus has a short-circuit fault. All the circuit breakers are controlled to be closed and all the traction auxiliary converters are controlled to operate if the bus has no short-circuit fault. The method proceeds to step S 102 if the bus has a short-circuit fault.

In step S102, it is determined whether any one of the traction auxiliary converters has an internal short-circuit fault. The method proceeds to step S103 if one of the traction auxiliary converters has an internal short-circuit fault. The method proceeds to step S 104 if no one of the traction auxiliary converters has the internal short-circuit fault.

In step S103, the traction auxiliary converter that has the internal short-circuit fault is controlled to stop operating.

In step S104, all of the multiple circuit breakers are opened. A short-circuit test is performed on each of the multiple medium voltage alternating current sub-buses, and information on a traction auxiliary converter that reports a bus short-circuit fault is acquired.

In step S105, a medium voltage alternating current sub-bus that has a fault is determined based on the information on the traction auxiliary converter that reports the bus short-circuit fault.

In step S106, operation states of the multiple circuit breakers and operation states of the multiple traction auxiliary converters are controlled based on the determined medium voltage alternating current sub-bus that has a fault.

The eight carriages in the carriage group are numbered sequentially as a carriage 1 to a carriage 8. The auxiliary power supply system includes 4 traction auxiliary converters respectively arranged in the carriage 2, the carriage 4, the carriage 5 and the carriage 7, and includes 3 circuit breakers connected between the 4 traction auxiliary converters. The 3 circuit breakers are respectively arranged in the carriage 3, the carriage 5 and the carriage 6. Based on the information on the traction auxiliary converter that reports the bus short-circuit fault, the medium voltage alternating current sub-bus that has a fault is determined as follows. In a case that a traction auxiliary converter in the carriage 2 reports the bus short-circuit information, a medium voltage alternating current sub-bus in the carriage 1 and the carriage 2 is determined to have a fault. In a case that a traction auxiliary converter in the carriage 4 reports the bus short-circuit information, a medium voltage alternating current sub-bus in the carriage 3 and the carriage 4 is determined to have a fault. In a case that a traction auxiliary converter in the carriage 5 reports the bus short-circuit information, a medium voltage alternating current sub-bus in the carriage 5 and the carriage 6 is determined to have a fault. In a case that a traction auxiliary converter in the carriage 7 reports the bus short-circuit information, a medium voltage alternating current sub-bus in the carriage 7 and the carriage 8 is determined to have a fault.

Optionally, after the traction auxiliary converter that has the internal short-circuit fault is controlled to stop operating, the method further includes a step S1031. In step S1031, based on a quantity of operating traction auxiliary converters, a portion of alternating current loads of the carriage group is disconnected gradually in an ascending order of priorities of the alternating current loads to reduce power required by the alternating current loads until the operating traction auxiliary converter meets a power supply requirement of the alternating current loads of the carriage group.

Optionally, whether any one of the traction auxiliary converter has an internal short-circuit fault is determined as follows. The traction auxiliary converter that reports fault information is controlled to stop operating. The traction auxiliary converter that reports the fault information is disconnected from the medium voltage alternating current sub-buses. The traction auxiliary converter that reports the fault information is controlled to start, by using a PWM pulse, an inverter of the traction auxiliary converter, so as to determine whether any one of the traction auxiliary converters has an internal short-circuit fault.

Optionally, based on the determined medium voltage alternating current sub-bus that has a fault, operation states of the multiple circuit breakers and operation states of the multiple traction auxiliary converters are controlled as follows. In a case that the medium voltage alternating current sub-bus in the carriage 1 and the carriage 2 has a fault, the circuit breaker in the carriage 3 is controlled to be opened, the circuit breakers in the carriage 5 and the carriage 6 are controlled to be closed, and the traction auxiliary converter in the carriage 2 is controlled to stop operating. In a case that the medium voltage alternating current sub-bus in the carriage 3 and the carriage 4 has a fault, the circuit breakers in the carriage 3 and the carriage 5 are controlled to be opened, the circuit breaker in the carriage 6 is controlled to be closed, and the traction auxiliary converter in the carriage 4 is controlled to stop operating. In a case that the medium voltage alternating current sub-bus in the carriage 5 and the carriage 6 has a fault, the circuit breakers in the carriage 5 and the carriage 6 are controlled to be opened, the circuit breaker in the carriage 3 is controlled to be closed, and the traction auxiliary converter in the carriage 5 is controlled to stop operating. In a case that the medium voltage alternating current sub-bus in the carriage 7 and the carriage 8 has a fault, the circuit breaker in the carriage 6 is controlled to be opened, the circuit breakers in the carriage 5 and the carriage 3 are controlled to be closed, and the traction auxiliary converter in the carriage 7 is controlled to stop operating. In a case that the medium voltage alternating current sub-bus in the carriage 1 and the carriage 2 has a fault and the medium voltage alternating current sub-bus in the carriage 3 and the carriage 4 has a fault, the circuit breakers in the carriage 3 and the carriage 5 are controlled to be opened, the circuit breaker in the carriage 6 is controlled to be closed, and the traction auxiliary converters in the carriage 2 and the carriage 4 are controlled to stop operating. In a case that the medium voltage alternating current sub-bus in the carriage 1 and the carriage 2 has a fault and the medium voltage alternating current sub-bus in the carriage 5 and the carriage 6 has a fault, all the circuit breakers are controlled to be opened, and the traction auxiliary converters in the carriage 2 and the carriage 5 are controlled to stop operating. In a case that the medium voltage alternating current sub-bus in the carriage 1 and the carriage 2 has a fault and the medium voltage alternating current sub-bus in the carriage 7 and the carriage 8 has a fault, the circuit breakers in the carriage 3 and the carriage 6 are controlled to be opened, the circuit breaker in the carriage 5 is controlled to be closed, and the traction auxiliary converters in the carriage 2 and the carriage 7 are controlled to stop operating. In a case that the medium voltage alternating current sub-bus in the carriage 3 and the carriage 4 has a fault and the medium voltage alternating current sub-bus in the carriage 5 and the carriage 6 has a fault, all the circuit breakers are controlled to be opened, and the traction auxiliary converters in the carriage 4 and the carriage 5 are controlled to stop operating. In a case that the medium voltage alternating current sub-bus in the carriage 3 and the carriage 4 has a fault and the medium voltage alternating current sub-bus in the carriage 7 and the carriage 8 has a fault, all the circuit breakers are controlled to be opened, and the traction auxiliary converters in the carriage 4 and the carriage 7 are controlled to stop operating. In a case that the medium voltage alternating current sub-bus in the carriage 5 and the carriage 6 has a fault and the medium voltage alternating current sub-bus in the carriage 7 and the carriage 8 has a fault, the circuit breakers in the carriage 5 and the carriage 6 are controlled to be opened, the circuit breaker in the carriage 3 is controlled to be closed, and the traction auxiliary converters in the carriage 5 and the carriage 7 are controlled to stop operating. In a case that the medium voltage alternating current sub-bus in the carriage 3 and the carriage 4, the medium voltage alternating current sub-bus in the carriage 5 and the carriage 6 and the medium voltage alternating current sub-bus in the carriage 7 and the carriage 8 each have a fault, all the circuit breakers are controlled to be opened, and the traction auxiliary converters in the carriage 4, the carriage 5 and the carriage 7 are controlled to stop operating. In a case that the medium voltage alternating current sub-bus in the carriage 1 and the carriage 2, the medium voltage alternating current sub-bus in the carriage 5 and the carriage 6 and the medium voltage alternating current sub-bus in the carriage 7 and the carriage 8 each have a fault, all the circuit breakers are controlled to be opened, and the traction auxiliary converters in the carriage 2, the carriage 5 and the carriage 7 are controlled to stop operating. In a case that the medium voltage alternating current sub-bus in the carriage 1 and the carriage 2, the medium voltage alternating current sub-bus in the carriage 3 and the carriage 4 and the medium voltage alternating current sub-bus in the carriage 7 and the carriage 8 each have a fault, all the circuit breakers are controlled to be opened, and the traction auxiliary converters in the carriage 2, the carriage 4 and the carriage 7 are controlled to stop operating. In a case that the medium voltage alternating current sub-bus in the carriage 3 and the carriage 4, the medium voltage alternating current sub-bus in the carriage 5 and the carriage 6 and the medium voltage alternating current sub-bus in the carriage 1 and the carriage 2 each have a fault, all the circuit breakers are controlled to be opened, and the traction auxiliary converters in the carriage 2, the carriage 4 and the carriage 5 are controlled to stop operating. In a case that each of the medium voltage alternating current sub-buses has a fault, all the circuit breakers are controlled to be opened and all the traction auxiliary converters are controlled to stop operating.

A system for controlling a medium voltage alternating current bus is provided. The system is applied to an auxiliary power supply system of a high-speed multiple-unit train. The high-speed multiple-unit train includes at least one carriage group each including eight carriages. The auxiliary power supply system includes multiple traction auxiliary converters arranged in different carriages and multiple circuit breakers connected between the multiple traction auxiliary converters. The multiple traction auxiliary converters form an entire medium voltage alternating current bus, which is divided into multiple medium voltage alternating current sub-buses by the multiple circuit breakers. The system for controlling a medium voltage alternating current bus includes a first determining module, a second determining module, a first controlling module, a second controlling module, a fault determining module, and a third controlling module.

The first determining module is configured to determine whether the bus has a short-circuit fault, control all the circuit breakers to be closed and control all the traction auxiliary converters to operate if the bus has no short-circuit fault, and trigger the second determining module if the bus has a short-circuit fault.

The second determining module is configured to determine whether any one of the traction auxiliary converter has an internal short-circuit fault, trigger the first controlling module if one of the traction auxiliary converter has the internal short-circuit fault, and trigger the second controlling module if no one of the traction auxiliary converters has the internal short-circuit fault.

The first controlling module is configured to control the traction auxiliary converter that has the internal short-circuit fault to stop operating.

The second controlling module is configured to open all the multiple circuit breakers, perform a short-circuit test on each of the medium voltage alternating current sub-buses, and acquire information on a traction auxiliary converter that reports a bus short-circuit fault.

The fault determining module is configured to determine a medium voltage alternating current sub-bus that has a fault based on the information on the traction auxiliary converter that reports the bus short-circuit fault.

The third controlling module is configured to control operation states of the multiple circuit breakers and operation states of the traction auxiliary converters based on the determined medium voltage alternating current sub-bus that has a fault.

The eight carriages in the carriage group are numbered sequentially as a carriage 1 to a carriage 8. The auxiliary power supply system includes 4 traction auxiliary converters respectively arranged in the carriage 2, the carriage 4, the carriage 5 and the carriage 7, and includes 3 circuit breakers connected between the 4 traction auxiliary converters. The 3 circuit breakers are respectively arranged in the carriage 3, the carriage 5 and the carriage 6. The fault determining module is configured to: determine that a medium voltage alternating current sub-bus in the carriage 1 and the carriage 2 has a fault in a case that a traction auxiliary converter in the carriage 2 reports the bus short-circuit information; determine that a medium voltage alternating current sub-bus in the carriage 3 and the carriage 4 has a fault in a case that a traction auxiliary converter in the carriage 4 reports the bus short-circuit information; determine that a medium voltage alternating current sub-bus in the carriage 5 and the carriage 6 has a fault in a case that a traction auxiliary converter in the carriage 5 reports the bus short-circuit information; and determine that a medium voltage alternating current sub-bus in the carriage 7 and the carriage 8 has a fault in a case that a traction auxiliary converter in the carriage 7 reports the bus short-circuit information.

Optionally, the system further includes a load balancing module, which is configured to disconnect, based on a quantity of operating traction auxiliary converters, a portion of alternating current loads of the carriage group gradually in an ascending order of priorities of the alternating current loads to reduce power required by the alternating current loads until the operating traction auxiliary converters meet a power supply requirement of the alternating current loads of the carriage group.

Optionally, the second determining module is configured to determine whether any one of the traction auxiliary converters has an internal short-circuit fault as follows. The second determining module is configured to control a traction auxiliary converter that reports fault information to stop operating, disconnect the traction auxiliary converter that reports the fault information from the medium voltage alternating current sub-buses, and control the traction auxiliary converter that reports the fault information to start, by using a PWM pulse, an inverter of the traction auxiliary converter, to determine whether the traction auxiliary converter has the internal short-circuit fault.

Optionally, the third controlling module is configured to: control the circuit breaker in the carriage 3 to be opened and the circuit breakers in the carriage 5 and the carriage 6 to be closed, and control the traction auxiliary converter in the carriage 2 to stop operating, in a case that the medium voltage alternating current sub-bus in the carriage 1 and the carriage 2 has a fault; control the circuit breakers in the carriage 3 and the carriage 5 to be opened and the circuit breaker in the carriage 6 to be closed, and control the traction auxiliary converter in the carriage 4 to stop operating, in a case that the medium voltage alternating current sub-bus in the carriage 3 and the carriage 4 has a fault; control the circuit breakers in the carriage 5 and the carriage 6 to be opened and the circuit breaker in the carriage 3 to be closed, and control the traction auxiliary converter in the carriage 5 to stop operating, in a case that the medium voltage alternating current sub-bus in the carriage 5 and the carriage 6 has a fault; control the circuit breaker in the carriage 6 to be opened and the circuit breakers in the carriage 5 and the carriage 3 to be closed, and control the traction auxiliary converter in the carriage 7 to stop operating, in a case that the medium voltage alternating current sub-bus in the carriage 7 and the carriage 8 has a fault; control the circuit breakers in the carriage 3 and the carriage 5 to be opened and the circuit breaker in the carriage 6 to be closed, and control the traction auxiliary converters in the carriage 2 and the carriage 4 to stop operating, in a case that the medium voltage alternating current sub-bus in the carriage 1 and the carriage 2 has a fault and the medium voltage alternating current sub-bus in the carriage 3 and the carriage 4 has a fault; control all the circuit breakers to be opened, and control the traction auxiliary converters in the carriage 2 and the carriage 5 to stop operating, in a case that the medium voltage alternating current sub-bus in the carriage 1 and the carriage 2 has a fault and the medium voltage alternating current sub-bus in the carriage 5 and the carriage 6 has a fault; control the circuit breakers in the carriage 3 and the carriage 6 to be opened and the circuit breaker in the carriage 5 to be closed, and control the traction auxiliary converters in the carriage 2 and the carriage 7 to stop operating, in a case that the medium voltage alternating current sub-bus in the carriage 1 and the carriage 2 has a fault and the medium voltage alternating current sub-bus in the carriage 7 and the carriage 8 has a fault; control all the circuit breakers to be opened, and control the traction auxiliary converters in the carriage 4 and the carriage 5 to stop operating, in a case that the medium voltage alternating current sub-bus in the carriage 3 and the carriage 4 has a fault and the medium voltage alternating current sub-bus in the carriage 5 and the carriage 6 has a fault; control all the circuit breakers to be opened, and control the traction auxiliary converters in the carriage 4 and the carriage 7 to stop operating, in a case that the medium voltage alternating current sub-bus in the carriage 3 and the carriage 4 has a fault and the medium voltage alternating current sub-bus in the carriage 7 and the carriage 8 has a fault; control the circuit breakers in the carriage 5 and the carriage 6 to be opened and the circuit breaker in the carriage 3 to be closed, and control the traction auxiliary converters in the carriage 5 and the carriage 7 to stop operating, in a case that the medium voltage alternating current sub-bus in the carriage 5 and the carriage 6 has a fault and the medium voltage alternating current sub-bus in the carriage 7 and the carriage 8 has a fault; control all the circuit breakers to be opened, and control the traction auxiliary converters in the carriage 4, the carriage 5 and the carriage 7 to stop operating, in a case that the medium voltage alternating current sub-bus in the carriage 3 and the carriage 4, the medium voltage alternating current sub-bus in the carriage 5 and the carriage 6 and the medium voltage alternating current sub-bus in the carriage 7 and the carriage 8 each have a fault; control all the circuit breakers to be opened, and control the traction auxiliary converters in the carriage 2, the carriage 5 and the carriage 7 to stop operating, in a case that the medium voltage alternating current sub-bus in the carriage 1 and the carriage 2, the medium voltage alternating current sub-bus in the carriage 5 and the carriage 6 and the medium voltage alternating current sub-bus in the carriage 7 and the carriage 8 each have a fault; control all the circuit breakers to be opened, and control the traction auxiliary converters in the carriage 2, the carriage 4 and the carriage 7 to stop operating, in a case that the medium voltage alternating current sub-bus in the carriage 1 and the carriage 2, the medium voltage alternating current sub-bus in the carriage 3 and the carriage 4 and the medium voltage alternating current sub-bus in the carriage 7 and the carriage 8 each have a fault; control all the circuit breakers to be opened, and control the traction auxiliary converters in the carriage 2, the carriage 4 and the carriage 5 to stop operating, in a case that the medium voltage alternating current sub-bus in the carriage 3 and the carriage 4, the medium voltage alternating current sub-bus in the carriage 5 and the carriage 6 and the medium voltage alternating current sub-bus in the carriage 1 and the carriage 2 each have a fault; and control all the circuit breakers to be opened and control all the traction auxiliary converters to stop operating in a case that each of the medium voltage alternating current sub-buses has a fault.

It can be seen from the above technical solutions that, a method and a system for controlling a medium voltage alternating current bus are provided according to the embodiments of the present disclosure. The method is applied to a high-speed multiple-unit train provided with multiple medium voltage alternating current sub-buses. In a case that the bus has a short-circuit fault, by determining whether a traction auxiliary converter has an internal short-circuit fault and performing the short-circuit test on each of the multiple medium voltage alternating current sub-buses, the medium voltage alternating current sub-buses can be controlled differently under different operation conditions, so as to reduce the impact on the entire high-speed multiple-unit train due to a short-circuit fault in the bus. Therefore, the high-speed multiple-unit train has to stop and wait for rescue only in an extreme condition, thereby improving operational stability of the high-speed multiple-unit train.

### BRIEF DESCRIPTION OF THE DRAWINGS

In order to more clearly illustrate technical solutions in embodiments of the present disclosure or in the conventional technology, the drawings to be used in the description of the embodiments or the conventional technology are briefly described below. Apparently, the drawings in the following description show only some embodiments of the present disclosure, and other drawings may be obtained by those skilled in the art from the disclosed drawings without any creative work.
Figure 1 is a schematic flowchart of a method for controlling a medium voltage alternating current bus according to an embodiment of the present disclosure;
Figure 2 is a schematic structural diagram of a carriage group according to an embodiment of the present disclosure; and
Figure 3 is a schematic flowchart of a method for controlling a medium voltage alternating current bus according to another embodiment of the present disclosure.

### DETAILED DESCRIPTION OF EMBODIMENTS

As described in the background part, the medium voltage alternating current bus of the high-speed multiple-unit train is divided into a few of sections according to the conventional technology. Generally, a circuit breaker is arranged in the middle of the medium voltage alternating current bus to divide the entire medium voltage alternating current bus into two sections. In a case that one of the two sections of the medium voltage alternating current bus has a fault, the circuit breaker is opened to ensure that the medium voltage alternating current bus in a half of the high-speed multiple-unit train continues to supply power normally.

For example, a high-speed multiple-unit train including eight carriages is generally provided with four traction auxiliary converters, which are electrically connected via vehicle power boxes or external power supply boxes in the carriages, to form the medium voltage alternating current bus. Generally, a circuit breaker is arranged in a vehicle power box or external power supply box in a carriage 5. When the medium voltage alternating current bus has a fault, such as a short-circuit fault of the entire alternating current bus resulted from a short-circuit fault of an internal alternating current load in a carriage 2, the circuit breaker may be opened under control of a TCMS in the train network, such that the medium voltage alternating current bus is divided into two sections, i.e., a section of the medium voltage alternating current bus in a first half of the train (including carriages 1, 2, 3, 4), and the other section of the medium voltage alternating current bus in a second half of the train (including carriages 5, 6, 7, 8). Since the fault point is in the carriage 2, the section of the bus in the second half of the train has no short-circuit fault after the circuit breaker is opened. Therefore, Auxiliary inverter modules in carriages 5 and 7 operate normally to supply power to the second half of the train. Since the fault point is in the section of the bus in the first half of the train, a sensor in the traction auxiliary system can only detect that a short-circuit fault occurs in the section of the bus in the first half of the train. Therefore, auxiliary inverter modules in carriages 2 and 4 stop operating, and thus all medium voltage alternating current loads including a traction system and a cooling device for a high-voltage system in the first half of the train are powered down. In this case, only a high-voltage system and a traction system in the second half of the train serve the entire train for emergency operation. In a severe condition, the sections of the bus in both the first half and the second half of the train have faults, resulting in malfunction of alternating current loads in the entire train. The train has to stop and wait for rescue.

In view of this, a method for controlling a medium voltage alternating current bus is provided according to an embodiment of the present disclosure. The method is applied to an auxiliary power supply system of a high-speed multiple-unit train. The high-speed multiple-unit train includes at least one carriage group each including eight carriages. The auxiliary power supply system includes multiple traction auxiliary converters arranged in different carriages and multiple circuit breakers connected between the multiple traction auxiliary converters. The multiple traction auxiliary converters form an entire medium voltage alternating current bus, which is divided into multiple medium voltage alternating current sub-buses by the multiple circuit breakers. The method for controlling a medium voltage alternating current bus includes the following steps S101 to S106.

In step S101, it is determined whether the bus has a short-circuit fault. All the circuit breakers are controlled to be closed and all the traction auxiliary converters are controlled to operate if the bus has no short-circuit fault. The method proceeds to step S 102 if the bus has a short-circuit fault.

In step S102, it is determined whether any one of the traction auxiliary converters has an internal short-circuit fault. The method proceeds to step S103 if one of the traction auxiliary converter has the internal short-circuit fault. The method proceeds to step S104 if no one of the traction auxiliary converter has the internal short-circuit fault.

In step S103, the traction auxiliary converter that has the internal short-circuit fault is controlled to stop operating.

In step S104, all of the multiple circuit breakers are opened. A short-circuit test is performed on each of the multiple medium voltage alternating current sub-buses, and information on a traction auxiliary converter that reports a bus short-circuit fault is acquired.

In step S105, a medium voltage alternating current sub-bus that has a fault is determined based on the information on the traction auxiliary converter that reports the bus short-circuit fault.

In step S 106, operation states of the multiple circuit breakers and operation states of the multiple traction auxiliary converters are controlled based on the determined medium voltage alternating current sub-bus that has a fault.

The method for controlling a medium voltage alternating current bus is implemented in a high-speed multiple-unit train provided with multiple medium voltage alternating current sub-buses. In actual applications, in a case that the bus has a short-circuit fault, by determining whether a traction auxiliary converter has an internal short-circuit fault and performing the short-circuit test on each of the multiple medium voltage alternating current sub-buses, the medium voltage alternating current sub-buses can be controlled differently under different operation conditions, so as to reduce the impact on the entire high-speed multiple-unit train due to a short-circuit fault in the bus. Therefore, the high-speed multiple-unit train has to stop and wait for rescue only in an extreme condition, thereby improving operational stability of the high-speed multiple-unit train.

Technical solutions in embodiments of the present disclosure are described clearly and completely in conjunction with the drawings in the embodiments of the present disclosure hereinafter. It is apparent that the described embodiments are only some rather than all embodiments of the present disclosure. All other embodiments obtained by those skilled in the art based on the embodiments of the present disclosure without any creative work fall within the protection scope of the present disclosure.

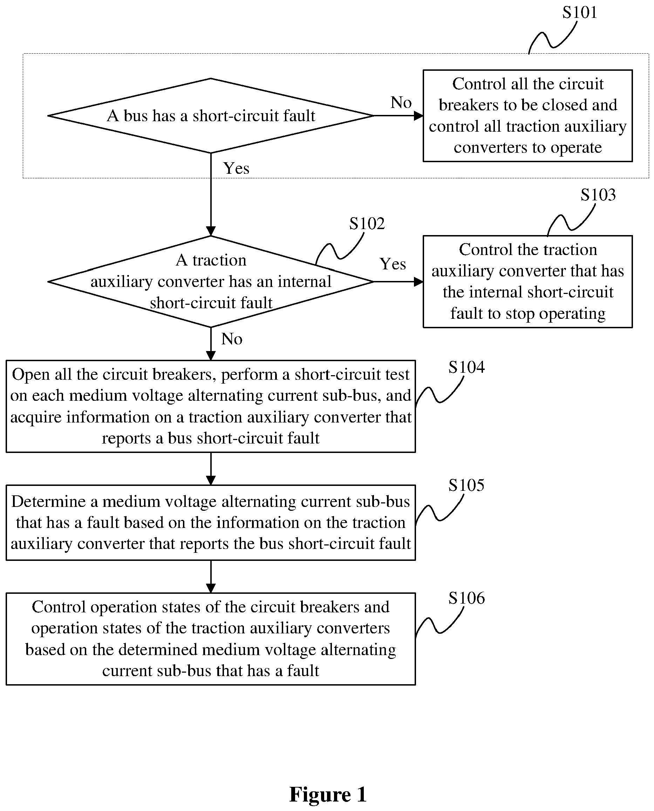

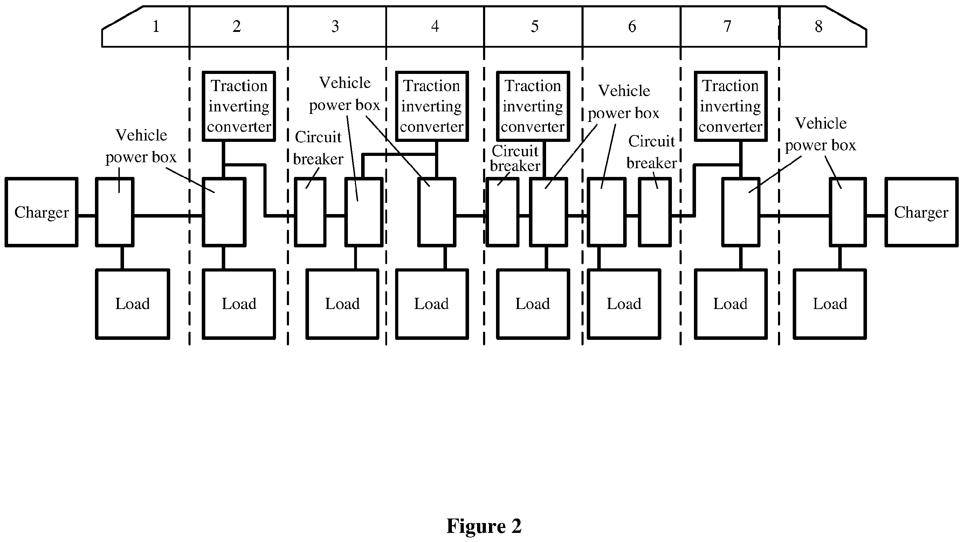

A method for controlling a medium voltage alternating current bus is provided according to an embodiment of the present disclosure. Reference is made to Figures 1 and 2. The method is applied to an auxiliary power supply system of a high-speed multiple-unit train. The high-speed multiple-unit train includes at least one carriage group each including eight carriages. The auxiliary power supply system includes multiple traction auxiliary converters arranged in different carriages and multiple circuit breakers connected between the multiple traction auxiliary converters. The multiple traction auxiliary converters form an entire medium voltage alternating current bus, which is divided into multiple medium voltage alternating current sub-buses by the multiple circuit breakers. The method includes the following steps S101 to S106.

In step S101, it is determined whether the bus has a short-circuit fault. All the circuit breakers are controlled to be closed and all the traction auxiliary converters are controlled to operate if the bus has no short-circuit fault. The method proceeds to step S 102 if the bus has a short-circuit fault.

In step S102, it is determined whether any one of the traction auxiliary converters has an internal short-circuit fault. The method proceeds to step S103 if one of the traction auxiliary converter has the internal short-circuit fault. The method proceeds to step S104 if no one of the traction auxiliary converter has the internal short-circuit fault.

In step S103, the traction auxiliary converter that has the internal short-circuit fault is controlled to stop operating.

In step S104, all of the multiple circuit breakers are opened. A short-circuit test is performed on each of the multiple medium voltage alternating current sub-buses, and information on a traction auxiliary converter that reports a bus short-circuit fault is acquired.

In step S105, a medium voltage alternating current sub-bus that has a fault is determined based on the information on the traction auxiliary converter that reports the bus short-circuit fault.

In step S 106, operation states of the multiple circuit breakers and operation states of the multiple traction auxiliary converters are controlled based on the determined medium voltage alternating current sub-bus that has a fault.

Referring to Figure 2, each carriage group includes eight carriages. The eight carriages in the carriage group are numbered sequentially as a carriage 1 to a carriage 8. The auxiliary power supply system includes 4 traction auxiliary converters and 3 circuit breakers connected between the 4 traction auxiliary converters. The 4 traction auxiliary converters are arranged in the carriage 2, the carriage 4, the carriage 5 and the carriage 7, respectively. The 3 circuit breakers are arranged in the carriage 3, the carriage 5 and the carriage 6, respectively. In addition, a vehicle power box and a load in each carriage, as well as changers in the carriage 1 and the carriage 8 are also shown in Figure 2.

In Figure 2, one end of each of the carriage 1 and the carriage 8 for the train head is referred to as a "B" end, and the other end of each of the carriage 1 and the carriage 8 is referred to as "A" end. One end of a carriage other than the carriage 1 and the carriage 8 closest to the train head (that is, "B" end of carriage 1 or 8) is referred to as a "B" end, and the other end of the carriage other than the carriage 1 and the carriage 8 is referred to as "A" end.

With the arrangement of auxiliary traction converters and circuit breakers as shown in Figure 2, the entire alternating current bus is divided into 4 medium voltage alternating current sub-buses. One medium voltage alternating current sub-bus is in the carriage 7 and the carriage 8. One medium voltage alternating current sub-bus is in the carriage 3 and the carriage 4. One medium voltage alternating current sub-bus is in the carriage 5 and the carriage 6. One medium voltage alternating current sub-bus is in the carriage 1 and the carriage 2. In a case that all the circuit breakers are closed, the 4 medium voltage alternating current sub-buses are connected in series to form the entire medium voltage alternating current bus.

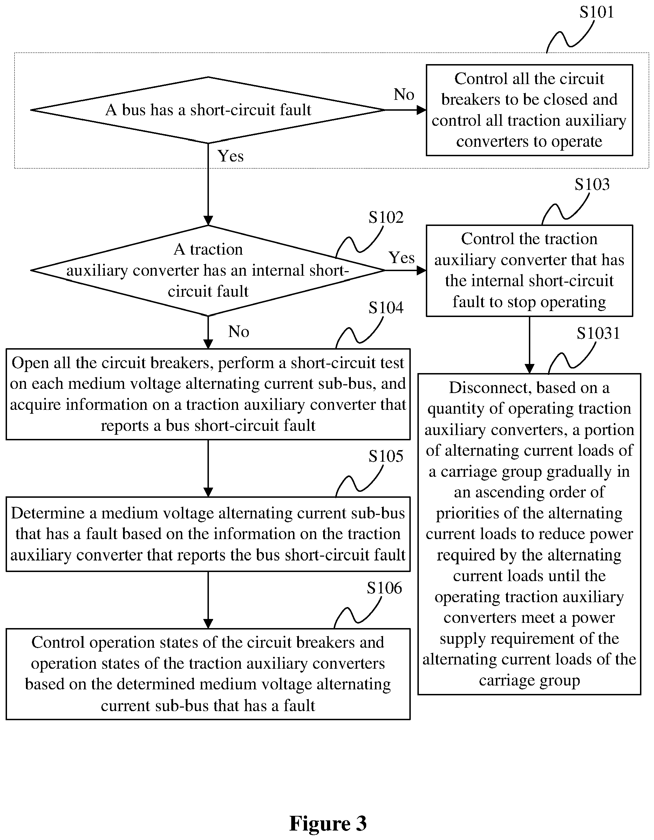

Based on the above embodiment, in an embodiment of the present disclosure, as shown in Figure 3, after the traction auxiliary converter that has the internal short-circuit fault is controlled to stop operating, the method further includes a step S1031.

In step S1031, based on a quantity of operating traction auxiliary converters, a portion of alternating current loads of the carriage group is disconnected gradually in an ascending order of priorities of the alternating current loads to reduce power required by the alternating current loads until the operating traction auxiliary converters meet a power supply requirement of the alternating current loads of the carriage group.

In a case that one or more traction auxiliary converters stop operating due to an internal short-circuit fault, the power supply requirement of alternating current loads in the high-speed multiple-unit train may not be met. Therefore, in this embodiment, after the traction auxiliary converter that has the internal short-circuit fault is controlled to stop operating, medium voltage load management may be performed by a train control and management system (TCMS), to appropriately disconnect a portion of alternating current loads with low priorities, so as to ensure functions necessary for the operation of the train. In addition, the traction auxiliary converter that has the internal short-circuit fault may be displayed by the TCMS to remind a train driver.

Based on the above embodiment, in another embodiment of the present disclosure, whether any one of the traction auxiliary converters has an internal short-circuit fault is determined as follows. The traction auxiliary converter that reports fault information is controlled to stop operating. The traction auxiliary converter that reports the fault information is disconnected from the medium voltage alternating current sub-buses. The traction auxiliary converter that reports the fault information is controlled to start, by using a PWM pulse, an inverter of the traction auxiliary converter, so as to determine whether the traction auxiliary converter has the internal short-circuit fault.

PWM is short for Pulse Width Modulation.

Based on the above embodiment, in another embodiment of the present disclosure, the eight carriages in the carriage group are numbered sequentially as a carriage 1 to a carriage 8. The auxiliary power supply system includes 4 traction auxiliary converters and 3 circuit breakers connected between the 4 traction auxiliary converters. The 4 traction auxiliary converters are arranged in the carriage 2, the carriage 4, the carriage 5 and the carriage 7, respectively. The 3 circuit breakers are arranged in the carriage 3, the carriage 5 and the carriage 6, respectively.

Based on the information on the traction auxiliary converter that reports the bus short-circuit fault, the medium voltage alternating current sub-bus that has a fault is determined as follows. In a case that a traction auxiliary converter in the carriage 2 reports the bus short-circuit information, a medium voltage alternating current sub-bus in the carriage 1 and the carriage 2 is determined to have a fault. In a case that a traction auxiliary converter in the carriage 4 reports the bus short-circuit information, a medium voltage alternating current sub-bus in the carriage 3 and the carriage 4 is determined to have a fault. In a case that a traction auxiliary converter in the carriage 5 reports the bus short-circuit information, a medium voltage alternating current sub-bus in the carriage 5 and the carriage 6 is determined to have a fault. In a case that a traction auxiliary converter in the carriage 7 reports the bus short-circuit information, a medium voltage alternating current sub-bus in the carriage 7 and the carriage 8 is determined to have a fault.

Referring to Table 1, based on a serial number of a carriage in which the traction auxiliary converter that reports the bus short-circuit fault is arranged, the medium-voltage alternating current sub-bus that has a short-circuit fault is positioned.

**Table 1 Positioning of a short-circuit fault**

| | | | | |
|---|---|---|---|---|
| **Traction auxiliary converter that reports a bus short-circuit fault** | Traction auxiliary converter in carriage 2 | Traction auxiliary converter in carriage 4 | Traction auxiliary converter in carriage 5 | Traction auxiliary converter in carriage 7 |
| **Result of positioning of a short-circuit fault** | Medium voltage alternating current sub-bus in carriage 1 and carriage 2 is short-circuited | Medium voltage alternating current sub-bus in carriage 3 and carriage 4 is short-circuited | Medium voltage alternating current sub-bus in carriage 5 and carriage 6 is short-circuited | Medium voltage alternating current sub-bus in carriage 7 and carriage 8 is short-circuited |

Accordingly, based on the determined medium voltage alternating current sub-bus that has a fault, operation states of the multiple circuit breakers and operation states of the multiple traction auxiliary converters are controlled as follows.

In a case that the medium voltage alternating current sub-bus in the carriage 1 and the carriage 2 has a fault, the circuit breaker in the carriage 3 is controlled to be opened, the circuit breakers in the carriage 5 and the carriage 6 are controlled to be closed, and the traction auxiliary converter in the carriage 2 is controlled to stop operating.

In a case that the medium voltage alternating current sub-bus in the carriage 3 and the carriage 4 has a fault, the circuit breakers in the carriage 3 and the carriage 5 are controlled to be opened, the circuit breaker in the carriage 6 is controlled to be closed, and the traction auxiliary converter in the carriage 4 is controlled to stop operating.

In a case that the medium voltage alternating current sub-bus in the carriage 5 and the carriage 6 has a fault, the circuit breakers in the carriage 5 and the carriage 6 are controlled to be opened, the circuit breaker in the carriage 3 is controlled to be closed, and the traction auxiliary converter in the carriage 5 is controlled to stop operating.

In a case that the medium voltage alternating current sub-bus in the carriage 7 and the carriage 8 has a fault, the circuit breaker in the carriage 6 is controlled to be opened, the circuit breakers in the carriage 5 and the carriage 3 are controlled to be closed, and the traction auxiliary converter in the carriage 7 is controlled to stop operating.

In a case that the medium voltage alternating current sub-bus in the carriage 1 and the carriage 2 has a fault and the medium voltage alternating current sub-bus in the carriage 3 and the carriage 4 has a fault, the circuit breakers in the carriage 3 and the carriage 5 are controlled to be opened, the circuit breaker in the carriage 6 is controlled to be closed, and the traction auxiliary converters in the carriage 2 and the carriage 4 are controlled to stop operating.

In a case that the medium voltage alternating current sub-bus in the carriage 1 and the carriage 2 has a fault and the medium voltage alternating current sub-bus in the carriage 5 and the carriage 6 has a fault, all the circuit breakers are controlled to be opened, and the traction auxiliary converters in the carriage 2 and the carriage 5 are controlled to stop operating.

In a case that the medium voltage alternating current sub-bus in the carriage 1 and the carriage 2 has a fault and the medium voltage alternating current sub-bus in the carriage 7 and the carriage 8 has a fault, the circuit breakers in the carriage 3 and the carriage 6 are controlled to be opened, the circuit breaker in the carriage 5 is controlled to be closed, and the traction auxiliary converters in the carriage 2 and the carriage 7 are controlled to stop operating.

In a case that the medium voltage alternating current sub-bus in the carriage 3 and the carriage 4 has a fault and the medium voltage alternating current sub-bus in the carriage 5 and the carriage 6 has a fault, all the circuit breakers are controlled to be opened, and the traction auxiliary converters in the carriage 4 and the carriage 5 are controlled to stop operating.

In a case that the medium voltage alternating current sub-bus in the carriage 3 and the carriage 4 has a fault and the medium voltage alternating current sub-bus in the carriage 7 and the carriage 8 has a fault, all the circuit breakers are controlled to be opened, and the traction auxiliary converters in the carriage 4 and the carriage 7 are controlled to stop operating.

In a case that the medium voltage alternating current sub-bus in the carriage 5 and the carriage 6 has a fault and the medium voltage alternating current sub-bus in the carriage 7 and the carriage 8 has a fault, the circuit breakers in the carriage 5 and the carriage 6 are controlled to be opened, the circuit breaker in the carriage 3 is controlled to be closed, and the traction auxiliary converters in the carriage 5 and the carriage 7 are controlled to stop operating.

In a case that the medium voltage alternating current sub-bus in the carriage 3 and the carriage 4, the medium voltage alternating current sub-bus in the carriage 5 and the carriage 6 and the medium voltage alternating current sub-bus in the carriage 7 and the carriage 8 each have a fault, all the circuit breakers are controlled to be opened, and the traction auxiliary converters in the carriage 4, the carriage 5 and the carriage 7 are controlled to stop operating.

In a case that the medium voltage alternating current sub-bus in the carriage 1 and the carriage 2, the medium voltage alternating current sub-bus in the carriage 5 and the carriage 6 and the medium voltage alternating current sub-bus in the carriage 7 and the carriage 8 each have a fault, all the circuit breakers are controlled to be opened, and the traction auxiliary converters in the carriage 2, the carriage 5 and the carriage 7 are controlled to stop operating.

In a case that the medium voltage alternating current sub-bus in the carriage 1 and the carriage 2, the medium voltage alternating current sub-bus in the carriage 3 and the carriage 4 and the medium voltage alternating current sub-bus in the carriage 7 and the carriage 8 each have a fault, all the circuit breakers are controlled to be opened, and the traction auxiliary converters in the carriage 2, the carriage 4 and the carriage 7 are controlled to stop operating.

In a case that the medium voltage alternating current sub-bus in the carriage 3 and the carriage 4, the medium voltage alternating current sub-bus in the carriage 5 and the carriage 6 and the medium voltage alternating current sub-bus in the carriage 1 and the carriage 2 each have a fault, all the circuit breakers are controlled to be opened, and the traction auxiliary converters in the carriage 2, the carriage 4 and the carriage 5 are controlled to stop operating.

In a case that each of the medium voltage alternating current sub-buses has a fault, all the circuit breakers are controlled to be opened and all the traction auxiliary converters are controlled to stop operating.

Similarly, reference is made to Table 2, which shows a comparison between technical solutions for controlling operation states of circuit breakers and traction auxiliary converters based on the determined medium voltage alternating current sub-bus that has a fault and technical solutions according to the convention technology.

**Table 2 Train state control by TCMS**

| **Operation condition** | **Section of the bus having a short-circuit fault** | **Operation state of a circuit breaker in carriage 3** | **Operation state of a circuit breaker in carriage 5** | **Operation state of a circuit breaker in carriage 6** |
|---|---|---|---|---|
| 1 | Medium voltage alternating current sub-bus in carriages 1 and 2 only | Opened | Closed | Closed |
| 2 | Medium voltage alternating current sub-bus in carriages 3 and 4 only | Opened | Opened | Closed |
| 3 | Medium voltage alternating current sub-bus in carriages 5 and 6 only | Closed | Opened | Opened |
| 4 | Medium voltage alternating current sub-bus in carriages 7 and 8 only | Closed | Closed | Opened |
| 5 | Bus in carriages 1 and 2 is shorted, and bus in carriages 3 and 4 is shorted | Opened | Opened | Closed |
| 6 | Bus in carriages 1 and 2 is shorted, and bus carriages 5 and 6 is shorted | Opened | Opened | Opened |
| 7 | Bus in carriages 1 and 2 is shorted, and bus in carriages 7 and 8 is shorted | Opened | Closed | Opened |
| 8 | Bus in carriages 3 and 4 is shorted, and bus in carriages 5 and 6 is shorted | Opened | Opened | Opened |
| 9 | Bus in carriages 3 and 4 is shorted, and bus in carriages 7 and 8 is shorted | Opened | Opened | Opened |
| 10 | Bus in carriages 5 and 6 is shorted, and bus in carriages 7 and 8 is shorted | Closed | Opened | Opened |
| 11 | Only bus in carriages 1 and 2 is normal (the other 3 bus sections are shorted) | Opened | Opened | Opened |
| 12 | Only bus in carriages 3 and 4 is normal (the other 3 bus sections are shorted) | Opened | Opened | Opened |
| 13 | Only bus in carriages 5 and 6 is normal (the other 3 bus sections are shorted) | Opened | Opened | Opened |
| 14 | Only bus in carriages 7 and 8 is normal (the other 3 bus sections are shorted) | Opened | Opened | Opened |
| 15 | The 4 medium voltage alternating current sub-buses each have a short-circuit fault | Opened | Opened | Opened |
| | | | | |

| **Operation condition** | **stopped auxiliary converter after short-circuit test** | **Can the entire train operate** | | **Can the entire train operate using one circuit breaker conventionally** |
|---|---|---|---|---|
| 1 | Traction auxiliary converter in carriage 2 is stopped | Yes, traction auxiliary converters in carriages 4, 5 and 7 keep operating | | Yes, traction systems in carriages 5 and 7 keep operating |
| 2 | Traction auxiliary converter in carriage 4 is stopped | Yes, traction auxiliary converters in carriages 2, 5 and 7 keep operating | | |
| 3 | Traction auxiliary converter in carriage 5 is stopped | Yes, traction auxiliary converters in carriages 2, 4 and 7 keep operating | | Yes, traction systems in carriages 2 and 4 keep operating |
| 4 | Traction auxiliary converter in carriage 7 is stopped | Yes, traction auxiliary converters in carriages 2, 4 and 5 keep operating | | |
| 5 | Traction auxiliary converters in carriages 2 and 4 are stopped | Yes, traction auxiliary converters in carriages 5 and 7 keep operating | | Yes, traction systems in carriages 5 and 7 keep operating |
| 6 | Traction auxiliary converters in carriages 2 and 5 are stopped | Yes, traction auxiliary converters in carriages 4 and 7 keep operating | | No, the train waits for rescue |
| 7 | Traction auxiliary converters in carriages 2 and 7 are stopped | Yes, traction auxiliary converters in carriages 4 and 5 keep operating | | No, the train waits for rescue |
| 8 | Traction auxiliary converters in carriages 2, 4, 5 and 7 are stopped because high-voltage power cannot be acquired due to shutdown of a cooling system of a high-voltage transformer | No, the train waits for rescue because high-voltage power cannot be acquired from the entire train due to shutdown of a cooling system of high-voltage transformers in carriages 3 and 6 | | No, the train waits for rescue |
| 9 | Traction auxiliary converters in carriages 4 and 7 are stopped | Yes, traction auxiliary converters in carriages 2 and 5 keep operating | | No, the train waits for rescue |
| 10 | Traction auxiliary converters in carriages 5 and 7 are stopped | Yes, traction auxiliary converters in carriages 2 and 4 keep operating | | Yes, traction systems in carriages 2 and 4 keep operating |
| 11 | Traction auxiliary converters in carriages 2, 4, 5 and 7 are stopped because high-voltage power cannot be acquired due to shutdown of a cooling system of high-voltage transformer | No, the train waits for rescue because high-voltage power cannot be acquired from the entire train due to shutdown of a cooling system of high-voltage transformers in carriages 3 and 6 | | No, the train waits for rescue |
| 12 | Traction auxiliary converters in carriages 2, 5 and 7 are stopped | Yes, only one traction auxiliary converter in the entire train keeps operating | | No, the train waits for rescue |
| 13 | Traction auxiliary converters in carriages 2, 4 and 7 are stopped | Yes, only one traction auxiliary converter in the entire train keeps operating | | No, the train waits for rescue |
| 14 | Traction auxiliary converters in carriages 2, 4, 5 and 7 are stopped because high-voltage power cannot be acquired due to shutdown of a cooling system of high-voltage transformer | No, the train waits for rescue because high-voltage power cannot be acquired from the entire train due to shutdown of a cooling system of high-voltage transformers in carriages 3 and 6 | | No, the train waits for rescue |
| 15 | Traction auxiliary converters in carriages 2, 4, 5 and 7 are all stopped | No, the train waits for rescue | | No, the train waits for rescue |

It can be seen from Table 2 that, with the method for controlling a medium voltage alternating current bus according to the embodiment of the present disclosure, the train has to wait for rescue only in operation conditions 8, 11, 14 and 15, so that availability of the train is greatly improved compared with the method for controlling a medium voltage alternating current bus according to the conventional technology.

A system for controlling a medium voltage alternating current bus according to an embodiment of the present disclosure is described below. The system for controlling a medium voltage alternating current bus described below and the method for controlling a medium voltage alternating current bus described above may be referred to each other.

Accordingly, a system for controlling a medium voltage alternating current bus is provided according to an embodiment of the present disclosure. The system is applied to an auxiliary power supply system of a high-speed multiple-unit train. The high-speed multiple-unit train includes at least one carriage group each including eight carriages. The auxiliary power supply system includes multiple traction auxiliary converters arranged in different carriages and multiple circuit breakers connected between the multiple traction auxiliary converters. The multiple traction auxiliary converters form an entire medium voltage alternating current bus, which is divided into multiple medium voltage alternating current sub-buses by the multiple circuit breakers. The system for controlling a medium voltage alternating current bus includes a first determining module, a second determining module, a first controlling module, a second controlling module, a fault determining module, and a third controlling module.

The first determining module is configured to determine whether the bus has a short-circuit fault, control all the circuit breakers to be closed and control all the traction auxiliary converters to operate if the bus has no short-circuit fault, and trigger the second determining module if the bus has a short-circuit fault.

The second determining module is configured to determine whether any one of the traction auxiliary converters has an internal short-circuit fault, trigger the first controlling module if one of the traction auxiliary converters has the internal short-circuit fault, and trigger the second controlling module if no one of the traction auxiliary converters has the internal short-circuit fault.

The first controlling module is configured to control the traction auxiliary converter that has the internal short-circuit fault to stop operating.

The second controlling module is configured to open all of the multiple circuit breakers, perform a short-circuit test on each of the multiple medium voltage alternating current sub-buses, and acquire information on a traction auxiliary converter that reports a bus short-circuit fault.

The fault determining module is configured to determine a medium voltage alternating current sub-bus that has a fault based on the information on the traction auxiliary converter that reports the bus short-circuit fault.

The third controlling module is configured to control operation states of the multiple circuit breakers and operation states of the multiple traction auxiliary converters based on the determined medium voltage alternating current sub-bus that has a fault.

Optionally, the system further includes a load balancing module, which is configured to disconnect, based on a quantity of operating traction auxiliary converters, a portion of alternating current loads of the carriage group gradually in an ascending order of priorities of the alternating current loads to reduce power required by the alternating current loads until the operating traction auxiliary converters meet a power supply requirement of the alternating current loads of the carriage group.

Optionally, the second determining module determines whether any one of the traction auxiliary converters has an internal short-circuit fault as follows. The second determining module controls a traction auxiliary converter that reports fault information to stop operating, disconnects the traction auxiliary converter that reports the fault information from the medium voltage alternating current sub-buses, and controls the traction auxiliary converter that reports the fault information to start, by using a PWM pulse, an inverter of the traction auxiliary converter, to determine whether the traction auxiliary converter has the internal short-circuit fault.

The eight carriages in the carriage group are numbered sequentially as a carriage 1 to a carriage 8. The auxiliary power supply system includes 4 traction auxiliary converters and 3 circuit breakers connected between the 4 traction auxiliary converters. The 4 traction auxiliary converters are arranged in the carriage 2, the carriage 4, the carriage 5 and the carriage 7, respectively. The 3 circuit breakers are arranged in the carriage 3, the carriage 5 and the carriage 6, respectively. The fault determining module is configured to: determine that a medium voltage alternating current sub-bus in the carriage 1 and the carriage 2 has a fault in a case that a traction auxiliary converter in the carriage 2 reports the bus short-circuit information; determine that a medium voltage alternating current sub-bus in the carriage 3 and the carriage 4 has a fault in a case that a traction auxiliary converter in the carriage 4 reports the bus short-circuit information; determine that a medium voltage alternating current sub-bus in the carriage 5 and the carriage 6 has a fault in a case that a traction auxiliary converter in the carriage 5 reports the bus short-circuit information; and determine that a medium voltage alternating current sub-bus in the carriage 7 and the carriage 8 has a fault in a case that a traction auxiliary converter in the carriage 7 reports the bus short-circuit information.

Optionally, the third controlling module is configured to:
control the circuit breaker in the carriage 3 to be opened and the circuit breakers in the carriage 5 and the carriage 6 to be closed, and control the traction auxiliary converter in the carriage 2 to stop operating, in a case that the medium voltage alternating current sub-bus in the carriage 1 and the carriage 2 has a fault;
control the circuit breakers in the carriage 3 and the carriage 5 to be opened and the circuit breaker in the carriage 6 to be closed, and control the traction auxiliary converter in the carriage 4 to stop operating, in a case that the medium voltage alternating current sub-bus in the carriage 3 and the carriage 4 has a fault;
control the circuit breakers in the carriage 5 and the carriage 6 to be opened and the circuit breaker in the carriage 3 to be closed, and control the traction auxiliary converter in the carriage 5 to stop operating, in a case that the medium voltage alternating current sub-bus in the carriage 5 and the carriage 6 has a fault;
control the circuit breaker in the carriage 6 to be opened and the circuit breakers in the carriage 5 and the carriage 3 to be closed, and control the traction auxiliary converter in the carriage 7 to stop operating, in a case that the medium voltage alternating current sub-bus in the carriage 7 and the carriage 8 has a fault;
control the circuit breakers in the carriage 3 and the carriage 5 to be opened and the circuit breaker in the carriage 6 to be closed, and control the traction auxiliary converters in the carriage 2 and the carriage 4 to stop operating, in a case that the medium voltage alternating current sub-bus in the carriage 1 and the carriage 2 has a fault and the medium voltage alternating current sub-bus in the carriage 3 and the carriage 4 has a fault;
control all the circuit breakers to be opened, and control the traction auxiliary converters in the carriage 2 and the carriage 5 to stop operating, in a case that the medium voltage alternating current sub-bus in the carriage 1 and the carriage 2 has a fault and the medium voltage alternating current sub-bus in the carriage 5 and the carriage 6 has a fault;
control the circuit breakers in the carriage 3 and the carriage 6 to be opened and the circuit breaker in the carriage 5 to be closed, and control the traction auxiliary converters in the carriage 2 and the carriage 7 to stop operating, in a case that the medium voltage alternating current sub-bus in the carriage 1 and the carriage 2 has a fault and the medium voltage alternating current sub-bus in the carriage 7 and the carriage 8 has a fault;
control all the circuit breakers to be opened, and control the traction auxiliary converters in the carriage 4 and the carriage 5 to stop operating, in a case that the medium voltage alternating current sub-bus in the carriage 3 and the carriage 4 has a fault and the medium voltage alternating current sub-bus in the carriage 5 and the carriage 6 has a fault;
control all the circuit breakers to be opened, and control the traction auxiliary converters in the carriage 4 and the carriage 7 to stop operating, in a case that the medium voltage alternating current sub-bus in the carriage 3 and the carriage 4 has a fault and the medium voltage alternating current sub-bus in the carriage 7 and the carriage 8 has a fault;
control the circuit breakers in the carriage 5 and the carriage 6 to be opened and the circuit breaker in the carriage 3 to be closed, and control the traction auxiliary converters in the carriage 5 and the carriage 7 to stop operating, in a case that the medium voltage alternating current sub-bus in the carriage 5 and the carriage 6 has a fault and the medium voltage alternating current sub-bus in the carriage 7 and the carriage 8 has a fault;
control all the circuit breakers to be opened, and control the traction auxiliary converters in the carriage 4, the carriage 5 and the carriage 7 to stop operating, in a case that the medium voltage alternating current sub-bus in the carriage 3 and the carriage 4, the medium voltage alternating current sub-bus in the carriage 5 and the carriage 6 and the medium voltage alternating current sub-bus in the carriage 7 and the carriage 8 each have a fault;
control all the circuit breakers to be opened, and control the traction auxiliary converters in the carriage 2, the carriage 5 and the carriage 7 to stop operating, in a case that the medium voltage alternating current sub-bus in the carriage 1 and the carriage 2, the medium voltage alternating current sub-bus in the carriage 5 and the carriage 6 and the medium voltage alternating current sub-bus in the carriage 7 and the carriage 8 each have a fault;
control all the circuit breakers to be opened, and control the traction auxiliary converters in the carriage 2, the carriage 4 and the carriage 7 to stop operating, in a case that the medium voltage alternating current sub-bus in the carriage 1 and the carriage 2, the medium voltage alternating current sub-bus in the carriage 3 and the carriage 4 and the medium voltage alternating current sub-bus in the carriage 7 and the carriage 8 each have a fault;
control all the circuit breakers to be opened, and control the traction auxiliary converters in the carriage 2, the carriage 4 and the carriage 5 to stop operating, in a case that the medium voltage alternating current sub-bus in the carriage 3 and the carriage 4, the medium voltage alternating current sub-bus in the carriage 5 and the carriage 6 and the medium voltage alternating current sub-bus in the carriage 1 and the carriage 2 each have a fault; and
control all the circuit breakers to be opened and control all the traction auxiliary converters to stop operating in a case that each of the medium voltage alternating current sub-buses has a fault.

In summary, a method and a system for controlling a medium voltage alternating current bus are provided according to the embodiments of the present disclosure. The method is applied to a high-speed multiple-unit train provided with multiple medium voltage alternating current sub-buses. In a case that the bus has a short-circuit fault, by determining whether a traction auxiliary converter has an internal short-circuit fault and performing the short-circuit test on each of the multiple medium voltage alternating current sub-buses, the medium voltage alternating current sub-buses can be controlled differently under different operation conditions, so as to reduce the impact on the entire high-speed multiple-unit train due to a short-circuit fault in the bus. Therefore, the high-speed multiple-unit train has to stop and wait for rescue only in an extreme condition, thereby improving operational stability of the high-speed multiple-unit train.

The embodiments in this specification are described in a progressive way, each of which emphasizes differences from others, and can be referred to each other for the same or similar parts among the embodiments.

Based on the above description of the disclosed embodiments, those skilled in the art can implement or use the technical solution in the present disclosure. It is apparent to those skilled in the art to make various modifications to these without departing from the scope of the claims.

## Claims

1. A method for controlling a medium voltage alternating current bus, applied to an auxiliary power supply system of a high-speed multiple-unit train, the high-speed multiple-unit train comprising at least one carriage group each comprising eight carriages, the auxiliary power supply system comprising a plurality of traction auxiliary converters arranged in different carriages and a plurality of circuit breakers connected between the plurality of traction auxiliary converters, the plurality of traction auxiliary converters forming an entire medium voltage alternating current bus, the plurality of circuit breakers dividing the entire medium voltage alternating current bus into a plurality of medium voltage alternating current sub-buses, and the method for controlling a medium voltage alternating current bus comprising:
determining (S101) whether the bus has a short-circuit fault, controlling all the circuit breakers to be closed and controlling all the traction auxiliary converters to operate if the bus has no short-circuit fault, and proceeding to step S102 if the bus has a short-circuit fault;
determining (S102) whether any one of the traction auxiliary converters has an internal short-circuit fault, proceeding to step S103 if one of the traction auxiliary converters has the internal short-circuit fault, and proceeding to step S104 if no one of the traction auxiliary converters has the internal short-circuit fault;
controlling (S103) the traction auxiliary converter that has the internal short-circuit fault to stop operating;
wherein the method includes:
opening (S104) all the circuit breakers, performing a short-circuit test on each of the medium voltage alternating current sub-buses, and acquiring information on a traction auxiliary converter that reports a bus short-circuit fault;
determining (S105) a medium voltage alternating current sub-bus that has a fault based on the information on the traction auxiliary converter that reports the bus short-circuit fault;
controlling (S106) operation states of the circuit breakers and operation states of the traction auxiliary converters based on the determined medium voltage alternating current sub-bus that has a fault;
wherein the eight carriages in the carriage group are numbered sequentially as a carriage 1 to a carriage 8, the auxiliary power supply system comprises 4 traction auxiliary converters respectively arranged in the carriage 2, the carriage 4, the carriage 5 and the carriage 7, and comprises 3 circuit breakers connected between the 4 traction auxiliary converters and respectively arranged in the carriage 3, the carriage 5 and the carriage 6; and
wherein the determining (S105) a medium voltage alternating current sub-bus that has a fault based on the information on the traction auxiliary converter that reports the bus short-circuit fault comprises:
determining that a medium voltage alternating current sub-bus in the carriage 1 and the carriage 2 has a fault in a case that a traction auxiliary converter in the carriage 2 reports the bus short-circuit information;
determining that a medium voltage alternating current sub-bus in the carriage 3 and the carriage 4 has a fault in a case that a traction auxiliary converter in the carriage 4 reports the bus short-circuit information;
determining that a medium voltage alternating current sub-bus in the carriage 5 and the carriage 6 has a fault in a case that a traction auxiliary converter in the carriage 5 reports the bus short-circuit information; and
determining that a medium voltage alternating current sub-bus in the carriage 7 and the carriage 8 has a fault in a case that a traction auxiliary converter in the carriage 7 reports the bus short-circuit information.

2. The method according to claim 1, after the controlling the traction auxiliary converter that has the internal short-circuit fault to stop operating, further comprising:
disconnecting (S 1031), based on a quantity of operating traction auxiliary converters, a portion of alternating current loads of the carriage group gradually in an ascending order of priorities of the alternating current loads to reduce power required by the alternating current loads until the operating traction auxiliary converters meet a power supply requirement of the alternating current loads of the carriage group.

3. The method according to claim 1, wherein the determining (S102) whether any one of the traction auxiliary converters has an internal short-circuit fault comprises:
controlling a traction auxiliary converter that reports fault information to stop operating, disconnecting the traction auxiliary converter that reports the fault information from the medium voltage alternating current sub-buses, and controlling the traction auxiliary converter that reports the fault information to start, by using a PWM pulse, an inverter of the traction auxiliary converter, to determine whether the traction auxiliary converter has the internal short-circuit fault.

4. The method according to claim 1, wherein the controlling (S106) operation states of the circuit breakers and operation states of the traction auxiliary converters based on the determined medium voltage alternating current sub-bus that has a fault comprises:
controlling the circuit breaker in the carriage 3 to be opened and the circuit breakers in the carriage 5 and the carriage 6 to be closed, and controlling the traction auxiliary converter in the carriage 2 to stop operating, in a case that the medium voltage alternating current sub-bus in the carriage 1 and the carriage 2 has a fault;
controlling the circuit breakers in the carriage 3 and the carriage 5 to be opened and the circuit breaker in the carriage 6 to be closed, and controlling the traction auxiliary converter in the carriage 4 to stop operating, in a case that the medium voltage alternating current sub-bus in the carriage 3 and the carriage 4 has a fault;
controlling the circuit breakers in the carriage 5 and the carriage 6 to be opened and the circuit breaker in the carriage 3 to be closed, and controlling the traction auxiliary converter in the carriage 5 to stop operating, in a case that the medium voltage alternating current sub-bus in the carriage 5 and the carriage 6 has a fault;
controlling the circuit breaker in the carriage 6 to be opened and the circuit breakers in the carriage 5 and the carriage 3 to be closed, and controlling the traction auxiliary converter in the carriage 7 to stop operating, in a case that the medium voltage alternating current sub-bus in the carriage 7 and the carriage 8 has a fault;
controlling the circuit breakers in the carriage 3 and the carriage 5 to be opened and the circuit breaker in the carriage 6 to be closed, and controlling the traction auxiliary converters in the carriage 2 and the carriage 4 to stop operating, in a case that the medium voltage alternating current sub-bus in the carriage 1 and the carriage 2 has a fault and the medium voltage alternating current sub-bus in the carriage 3 and the carriage 4 has a fault;
controlling all the circuit breakers to be opened, and controlling the traction auxiliary converters in the carriage 2 and the carriage 5 to stop operating, in a case that the medium voltage alternating current sub-bus in the carriage 1 and the carriage 2 has a fault and the medium voltage alternating current sub-bus in the carriage 5 and the carriage 6 has a fault;
controlling the circuit breakers in the carriage 3 and the carriage 6 to be opened and the circuit breaker in the carriage 5 to be closed, and controlling the traction auxiliary converters in the carriage 2 and the carriage 7 to stop operating, in a case that the medium voltage alternating current sub-bus in the carriage 1 and the carriage 2 has a fault and the medium voltage alternating current sub-bus in the carriage 7 and the carriage 8 has a fault;
controlling all the circuit breakers to be opened, and controlling the traction auxiliary converters in the carriage 4 and the carriage 5 to stop operating, in a case that the medium voltage alternating current sub-bus in the carriage 3 and the carriage 4 has a fault and the medium voltage alternating current sub-bus in the carriage 5 and the carriage 6 has a fault;
controlling all the circuit breakers to be opened, and controlling the traction auxiliary converters in the carriage 4 and the carriage 7 to stop operating, in a case that the medium voltage alternating current sub-bus in the carriage 3 and the carriage 4 has a fault and the medium voltage alternating current sub-bus in the carriage 7 and the carriage 8 has a fault;
controlling the circuit breakers in the carriage 5 and the carriage 6 to be opened and the circuit breaker in the carriage 3 to be closed, and controlling the traction auxiliary converters in the carriage 5 and the carriage 7 to stop operating, in a case that the medium voltage alternating current sub-bus in the carriage 5 and the carriage 6 has a fault and the medium voltage alternating current sub-bus in the carriage 7 and the carriage 8 has a fault;
controlling all the circuit breakers to be opened, and controlling the traction auxiliary converters in the carriage 4, the carriage 5 and the carriage 7 to stop operating, in a case that the medium voltage alternating current sub-bus in the carriage 3 and the carriage 4, the medium voltage alternating current sub-bus in the carriage 5 and the carriage 6 and the medium voltage alternating current sub-bus in the carriage 7 and the carriage 8 each have a fault;
controlling all the circuit breakers to be opened, and controlling the traction auxiliary converters in the carriage 2, the carriage 5 and the carriage 7 to stop operating, in a case that the medium voltage alternating current sub-bus in the carriage 1 and the carriage 2, the medium voltage alternating current sub-bus in the carriage 5 and the carriage 6 and the medium voltage alternating current sub-bus in the carriage 7 and the carriage 8 each have a fault;
controlling all the circuit breakers to be opened, and controlling the traction auxiliary converters in the carriage 2, the carriage 4 and the carriage 7 to stop operating, in a case that the medium voltage alternating current sub-bus in the carriage 1 and the carriage 2, the medium voltage alternating current sub-bus in the carriage 3 and the carriage 4 and the medium voltage alternating current sub-bus in the carriage 7 and the carriage 8 each have a fault;
controlling all the circuit breakers to be opened, and controlling the traction auxiliary converters in the carriage 2, the carriage 4 and the carriage 5 to stop operating, in a case that the medium voltage alternating current sub-bus in the carriage 3 and the carriage 4, the medium voltage alternating current sub-bus in the carriage 5 and the carriage 6 and the medium voltage alternating current sub-bus in the carriage 1 and the carriage 2 each have a fault; and
controlling all the circuit breakers to be opened and controlling all the traction auxiliary converters to stop operating in a case that each of the medium voltage alternating current sub-buses has a fault.

5. A system for controlling a medium voltage alternating current bus, applied to an auxiliary power supply system of a high-speed multiple-unit train, the high-speed multiple-unit train comprising at least one carriage group each comprising eight carriages, the auxiliary power supply system comprising a plurality of traction auxiliary converters arranged in different carriages and a plurality of circuit breakers connected between the plurality of traction auxiliary converters, the plurality of traction auxiliary converters forming an entire medium voltage alternating current bus, the plurality of circuit breakers dividing the entire medium voltage alternating current bus into a plurality of medium voltage alternating current sub-buses, and the system for controlling a medium voltage alternating current bus comprising a first determining module, a second determining module, a first controlling module, a second controlling module, a fault determining module, and a third controlling module, wherein
the first determining module is configured to determine whether the bus has a short-circuit fault, control all the circuit breakers to be closed and control all the traction auxiliary converters to operate if the bus has no short-circuit fault, and trigger the second determining module if the bus has a short-circuit fault;
the second determining module is configured to determine whether any one of the traction auxiliary converters has an internal short-circuit fault, trigger the first controlling module if one of the traction auxiliary converters has the internal short-circuit fault, and trigger the second controlling module if no one of the traction auxiliary converters has the internal short-circuit fault;
the first controlling module is configured to control the traction auxiliary converter that has the internal short-circuit fault to stop operating;
wherein the system includes:
the second controlling module is configured to open all the circuit breakers, perform a short-circuit test on each of the medium voltage alternating current sub-buses, and acquire information on a traction auxiliary converter that reports a bus short-circuit fault;
the fault determining module is configured to determine a medium voltage alternating current sub-bus that has a fault based on the information on the traction auxiliary converter that reports the bus short-circuit fault; and
the third controlling module is configured to control operation states of the circuit breakers and operation states of the traction auxiliary converters based on the determined medium voltage alternating current sub-bus that has a fault;
wherein the eight carriages in the carriage group are numbered sequentially as a carriage 1 to a carriage 8, the auxiliary power supply system comprises 4 traction auxiliary converters respectively arranged in the carriage 2, the carriage 4, the carriage 5 and the carriage 7, and comprises 3 circuit breakers connected between the 4 traction auxiliary converters and respectively arranged in the carriage 3, the carriage 5 and the carriage 6, wherein the fault determining module is configured to:
determine that a medium voltage alternating current sub-bus in the carriage 1 and the carriage 2 has a fault in a case that a traction auxiliary converter in the carriage 2 reports the bus short-circuit information;
determine that a medium voltage alternating current sub-bus in the carriage 3 and the carriage 4 has a fault in a case that a traction auxiliary converter in the carriage 4 reports the bus short-circuit information;
determine that a medium voltage alternating current sub-bus in the carriage 5 and the carriage 6 has a fault in a case that a traction auxiliary converter in the carriage 5 reports the bus short-circuit information; and
determine that a medium voltage alternating current sub-bus in the carriage 7 and the carriage 8 has a fault in a case that a traction auxiliary converter in the carriage 7 reports the bus short-circuit information.

6. The system according to claim 5, further comprising:
a load balancing module configured to disconnect, based on a quantity of operating traction auxiliary converters, a portion of alternating current loads of the carriage group gradually in an ascending order of priorities of the alternating current loads to reduce power required by the alternating current loads until the operating traction auxiliary converters meet a power supply requirement of the alternating current loads of the carriage group.

7. The system according to claim 5, wherein the second determining module being configured to determine whether any one of the traction auxiliary converters has an internal short-circuit fault comprises the second determining module being configured to:
control a traction auxiliary converter that reports fault information to stop operating, disconnect the traction auxiliary converter that reports the fault information from the medium voltage alternating current sub-buses, and control the traction auxiliary converter that reports the fault information to start, by using a PWM pulse, an inverter of the traction auxiliary converter, to determine whether the traction auxiliary converter has the internal short-circuit fault.

8. The system according to claim 5, wherein the third controlling module is configured to:
control the circuit breaker in the carriage 3 to be opened and the circuit breakers in the carriage 5 and the carriage 6 to be closed, and control the traction auxiliary converter in the carriage 2 to stop operating, in a case that the medium voltage alternating current sub-bus in the carriage 1 and the carriage 2 has a fault;
control the circuit breakers in the carriage 3 and the carriage 5 to be opened and the circuit breaker in the carriage 6 to be closed, and control the traction auxiliary converter in the carriage 4 to stop operating, in a case that the medium voltage alternating current sub-bus in the carriage 3 and the carriage 4 has a fault;
control the circuit breakers in the carriage 5 and the carriage 6 to be opened and the circuit breaker in the carriage 3 to be closed, and control the traction auxiliary converter in the carriage 5 to stop operating, in a case that the medium voltage alternating current sub-bus in the carriage 5 and the carriage 6 has a fault;
control the circuit breaker in the carriage 6 to be opened and the circuit breakers in the carriage 5 and the carriage 3 to be closed, and control the traction auxiliary converter in the carriage 7 to stop operating, in a case that the medium voltage alternating current sub-bus in the carriage 7 and the carriage 8 has a fault;
control the circuit breakers in the carriage 3 and the carriage 5 to be opened and the circuit breaker in the carriage 6 to be closed, and control the traction auxiliary converters in the carriage 2 and the carriage 4 to stop operating, in a case that the medium voltage alternating current sub-bus in the carriage 1 and the carriage 2 has a fault and the medium voltage alternating current sub-bus in the carriage 3 and the carriage 4 has a fault;
control all the circuit breakers to be opened, and control the traction auxiliary converters in the carriage 2 and the carriage 5 to stop operating, in a case that the medium voltage alternating current sub-bus in the carriage 1 and the carriage 2 has a fault and the medium voltage alternating current sub-bus in the carriage 5 and the carriage 6 has a fault;
control the circuit breakers in the carriage 3 and the carriage 6 to be opened and the circuit breaker in the carriage 5 to be closed, and control the traction auxiliary converters in the carriage 2 and the carriage 7 to stop operating, in a case that the medium voltage alternating current sub-bus in the carriage 1 and the carriage 2 has a fault and the medium voltage alternating current sub-bus in the carriage 7 and the carriage 8 has a fault;
control all the circuit breakers to be opened, and control the traction auxiliary converters in the carriage 4 and the carriage 5 to stop operating, in a case that the medium voltage alternating current sub-bus in the carriage 3 and the carriage 4 has a fault and the medium voltage alternating current sub-bus in the carriage 5 and the carriage 6 has a fault;
control all the circuit breakers to be opened, and control the traction auxiliary converters in the carriage 4 and the carriage 7 to stop operating, in a case that the medium voltage alternating current sub-bus in the carriage 3 and the carriage 4 has a fault and the medium voltage alternating current sub-bus in the carriage 7 and the carriage 8 has a fault;
control the circuit breakers in the carriage 5 and the carriage 6 to be opened and the circuit breaker in the carriage 3 to be closed, and control the traction auxiliary converters in the carriage 5 and the carriage 7 to stop operating, in a case that the medium voltage alternating current sub-bus in the carriage 5 and the carriage 6 has a fault and the medium voltage alternating current sub-bus in the carriage 7 and the carriage 8 has a fault;
control all the circuit breakers to be opened, and control the traction auxiliary converters in the carriage 4, the carriage 5 and the carriage 7 to stop operating, in a case that the medium voltage alternating current sub-bus in the carriage 3 and the carriage 4, the medium voltage alternating current sub-bus in the carriage 5 and the carriage 6 and the medium voltage alternating current sub-bus in the carriage 7 and the carriage 8 each have a fault;
control all the circuit breakers to be opened, and control the traction auxiliary converters in the carriage 2, the carriage 5 and the carriage 7 to stop operating, in a case that the medium voltage alternating current sub-bus in the carriage 1 and the carriage 2, the medium voltage alternating current sub-bus in the carriage 5 and the carriage 6 and the medium voltage alternating current sub-bus in the carriage 7 and the carriage 8 each have a fault;
control all the circuit breakers to be opened, and control the traction auxiliary converters in the carriage 2, the carriage 4 and the carriage 7 to stop operating, in a case that the medium voltage alternating current sub-bus in the carriage 1 and the carriage 2, the medium voltage alternating current sub-bus in the carriage 3 and the carriage 4 and the medium voltage alternating current sub-bus in the carriage 7 and the carriage 8 each have a fault;
control all the circuit breakers to be opened, and control the traction auxiliary converters in the carriage 2, the carriage 4 and the carriage 5 to stop operating, in a case that the medium voltage alternating current sub-bus in the carriage 3 and the carriage 4, the medium voltage alternating current sub-bus in the carriage 5 and the carriage 6 and the medium voltage alternating current sub-bus in the carriage 1 and the carriage 2 each have a fault; and
control all the circuit breakers to be opened and control all the traction auxiliary converters to stop operating in a case that each of the medium voltage alternating current sub-buses has a fault.

## Patentansprüche

1. Verfahren zur Steuerung eines Wechselstrom-Mittelspannungsbusses, das auf ein Hilfsstromversorgungssystem eines Hochgeschwindigkeits-Mehrfacheinheitszugs angewendet wird, wobei der Hochgeschwindigkeits-Mehrfacheinheitszug mindestens eine Waggongruppe mit jeweils acht Waggons aufweist, wobei das Hilfsstromversorgungssystem eine Vielzahl von Traktionshilfsstromrichtern, die in unterschiedlichen Waggons angeordnet sind, und eine Vielzahl von Leistungsschaltern aufweist, die zwischen der Vielzahl von Traktionshilfsstromrichtern geschaltet sind, wobei die Vielzahl von Traktionshilfsstromrichtern einen gesamten Wechselstrom-Mittelspannungsbus bilden, wobei die Vielzahl von Leistungsschaltern den gesamten Wechselstrom-Mittelspannungsbus in eine Vielzahl von Wechselstrom-Mittelspannungs-Unterbussen unterteilen und wobei das Verfahren zur Steuerung eines Wechselstrom-Mittelspannungsbusses umfasst:
Bestimmen (S101), ob der Bus einen Kurzschlussfehler aufweist, Steuern aller Leistungsschalter, um geschlossen zu werden, und Steuern aller Traktionshilfsstromrichter, um in Betrieb zu gehen, wenn der Bus keinen Kurzschlussfehler aufweist, und Übergehen zu Schritt S102, wenn der Bus einen Kurzschlussfehler aufweist;
Bestimmen (S102), ob einer der Traktionshilfsstromrichter einen internen Kurzschlussfehler aufweist, Übergehen zu Schritt S103, wenn einer der Traktionshilfsstromrichter den internen Kurzschlussfehler aufweist, und Übergehen zu Schritt S104, wenn keiner der Traktionshilfsstromrichter den internen Kurzschlussfehler aufweist;
Steuern (S103), des Traktionshilfsstromrichters, der den internen Kurzschlussfehler aufweist, um den Betrieb zu stoppen;
wobei das Verfahren umfasst:
Öffnen (S104) aller Leistungsschalter, Durchführen eines Kurzschlusstests an jedem der Wechselstrom-Mittelspannungsunterbusse und Erfassen von Informationen über einen Traktionshilfsstromrichter, der einen Buskurzschlussfehler meldet;
Bestimmen (S105) eines Wechselstrom-Mittelspannungsunterbusses, der einen Fehler aufweist, basierend auf den Informationen über den Traktionshilfsstromrichter, der den Buskurzschlussfehler meldet;
Steuern (S106) von Betriebszuständen der Leistungsschalter und Betriebszuständen der Traktionshilfsstromrichter basierend auf dem bestimmten Wechselstrom-Mittelspannungsunterbus, der einen Fehler aufweist;
wobei die acht Waggons in der Waggongruppe von Waggon 1 bis Waggon 8 fortlaufend nummeriert sind, das Hilfsstromversorgungssystem 4 Traktionshilfsstromrichter aufweist, die jeweils in Waggon 2, Waggon 4, Waggon 5 und Waggon 7 angeordnet sind, und 3 Leistungsschalter aufweist, die zwischen den 4 Traktionshilfsstromrichtern geschaltet und jeweils in Waggon 3, Waggon 5 und Waggon 6 angeordnet sind; und
wobei das Bestimmen (S105) eines Wechselstrom-Mittelspannungsunterbusses, der einen Fehler aufweist, basierend auf den Informationen über den Traktionshilfsstromrichter, der den Buskurzschlussfehler meldet, umfasst:
Bestimmen, dass ein Wechselstrom-Mittelspannungsunterbus in Waggon 1 und Waggon 2 einen Fehler aufweist, in einem Fall, in dem ein Traktionshilfsstromrichter in Waggon 2 die Buskurzschlussinformationen meldet;
Bestimmen, dass ein Wechselstrom-Mittelspannungsunterbus in Waggon 3 und Waggon 4 einen Fehler aufweist, in einem Fall, in dem ein Traktionshilfsstromrichter in Waggon 4 die Buskurzschlussinformationen meldet;
Bestimmen, dass ein Wechselstrom-Mittelspannungsunterbus in Waggon 5 und Waggon 6 einen Fehler aufweist, in einem Fall, in dem ein Traktionshilfsstromrichter in Waggon 5 die Buskurzschlussinformationen meldet; und
Bestimmen, dass ein Mittelspannungs-Wechselstrom- Unterbus in Waggon 7 und Waggon 8 einen Fehler aufweist, in einem Fall, in dem ein Traktionshilfsstromrichter in Waggon 7 die Buskurzschlussinformationen meldet.

2. Verfahren nach Anspruch 1 nach der Steuerung des Traktionshilfsstromrichters, der den internen Kurzschlussfehler aufweist, um den Betrieb zu stoppen, ferner umfassend:
Trennen (S1031), basierend auf einer Menge von in Betrieb befindlichen Traktionshilfsstromrichtern, eines Teils von Wechselstromlasten der Waggongruppe schrittweise in einer zunehmenden Reihenfolge von Prioritäten der Wechselstromlasten, um eine von den Wechselstromlasten benötigte Leistung zu reduzieren, bis die in Betrieb befindlichen Traktionshilfsstromrichter einen Leistungsversorgungsbedarf der Wechselstromlasten der Waggongruppe erfüllen.

3. Verfahren nach Anspruch 1, wobei das Bestimmen (S102), ob einer der Traktionshilfsstromrichter einen internen Kurzschlussfehler aufweist, umfasst:
Steuern eines Traktionshilfsstromrichters, der Fehlerinformationen meldet, den Betrieb zu stoppen, Trennen des Traktionshilfsstromrichters, der die Fehlerinformationen meldet, von den Wechselstrom-Mittelspannungsunterbussen und Steuern des Traktionshilfsstromrichters, der die Fehlerinformationen meldet, um unter Verwendung eines PWM-Pulses einen Wechselrichter des Traktionshilfsstromrichters zu starten, um zu bestimmen, ob der Traktionshilfsstromrichter den internen Kurzschlussfehler aufweist.

4. Verfahren nach Anspruch 1, wobei das Steuern (S106) von Betriebszuständen der Leistungsschalter und Betriebszuständen der Traktionshilfsstromrichter basierend auf dem bestimmten Wechselstrom-Mittelspannungsunterbus, der einen Fehler aufweist, umfasst:
Steuern des Leistungsschalters in Waggon 3, um geöffnet zu werden, und der Leistungsschalter in Waggon 5 und Waggon 6, um geschlossen zu werden, und Steuern des Traktionshilfsstromrichters in Waggon 2, um den Betrieb zu stoppen, in einem Fall, in dem der Wechselstrom-Mittelspannungsunterbus in Waggon 1 und Waggon 2 einen Fehler aufweist;
Steuern der Leistungsschalter in Waggon 3 und Waggon 5, um geöffnet zu werden, und des Leistungsschalters in Waggon 6, um geschlossen zu werden, und Steuern des Traktionshilfsstromrichters in Waggon 4, um den Betrieb zu stoppen, in einem Fall, in dem der Wechselstrom-Mittelspannungsunterbus in Waggon 3 und Waggon 4 einen Fehler aufweist;
Steuern der Leistungsschalter in Waggon 5 und Waggon 6, um geöffnet zu werden, und des Leistungsschalters in Waggon 3, um geschlossen zu werden, und Steuern des Traktionshilfsstromrichters in Waggon 5, um den Betrieb zu stoppen, in einem Fall, in dem der Wechselstrom-Mittelspannungsunterbus in Waggon 5 und Waggon 6 einen Fehler aufweist;
Steuern des Leistungsschalters in Waggon 6, um geöffnet zu werden, und der Leistungsschalter in Waggon 5 und Waggon 3, um geschlossen zu werden, und Steuern des Traktionshilfsstromrichters in Waggon 7, um den Betrieb zu stoppen, in einem Fall, in dem der Wechselstrom-Mittelspannungsunterbus in Waggon 7 und Waggon 8 einen Fehler aufweist;
Steuern der Leistungsschalter in Waggon 3 und Waggon 5, um geöffnet zu werden, und des Leistungsschalters in Waggon 6, um geschlossen zu werden, und Steuern der Traktionshilfsstromrichter in Waggon 2 und Waggon 4, um den Betrieb zu stoppen, in einem Fall, in dem der Wechselstrom-Mittelspannungsunterbus in Waggon 1 und Waggon 2 einen Fehler aufweist und der Wechselstrom-Mittelspannungsunterbus in Waggon 3 und Waggon 4 einen Fehler aufweist;
Steuern aller Leistungsschalter, um geöffnet zu werden, und Steuern der Traktionshilfsstromrichter in Waggon 2 und Waggon 5, um den Betrieb zu stoppen, in einem Fall, in dem der Wechselstrom-Mittelspannungsunterbus in Waggon 1 und Waggon 2 einen Fehler aufweist und der Wechselstrom-Mittelspannungsunterbus in Waggon 5 und Waggon 6 einen Fehler aufweist;
Steuern der Leistungsschalter in Waggon 3 und Waggon 6, um geöffnet zu werden, und des Leistungsschalters in Waggon 5, um geschlossen zu werden, und Steuern der Traktionshilfsstromrichter in Waggon 2 und Waggon 7, um den Betrieb zu stoppen, in einem Fall, in dem der Wechselstrom-Mittelspannungsunterbus in Waggon 1 und Waggon 2 einen Fehler aufweist und der Wechselstrom-Mittelspannungsunterbus in Waggon 7 und Waggon 8 einen Fehler aufweist;
Steuern aller Leistungsschalter, um geöffnet zu werden, und Steuern der Traktionshilfsstromrichter in Waggon 4 und Waggon 5, um den Betrieb zu stoppen, in einem Fall, in dem der Wechselstrom-Mittelspannungsunterbus in Waggon 3 und Waggon 4 einen Fehler aufweist und der Wechselstrom-Mittelspannungsunterbus in Waggon 5 und Waggon 6 einen Fehler aufweist;
Steuern aller Leistungsschalter, um geöffnet zu werden, und Steuern der Traktionshilfsstromrichter in Waggon 4 und Waggon 7, um den Betrieb zu stoppen, in einem Fall, in dem der Wechselstrom-Mittelspannungsunterbus in Waggon 3 und Waggon 4 einen Fehler aufweist und der Wechselstrom-Mittelspannungsunterbus in Waggon 7 und Waggon 8 einen Fehler aufweist;
Steuern der Leistungsschalter in Waggon 5 und Waggon 6, um geöffnet zu werden, und des Leistungsschalters in Waggon 3, um geöffnet zu werden, und Steuern der Traktionshilfsstromrichter in Waggon 5 und Waggon 7, um den Betrieb zu stoppen, in einem Fall, in dem der Wechselstrom-Mittelspannungsunterbus in Waggon 5 und Waggon 6 einen Fehler aufweist und der Wechselstrom-Mittelspannungsunterbus in Waggon 7 und Waggon 8 einen Fehler aufweist;
Steuern aller Leistungsschalter, um geöffnet zu werden, und Steuern der Traktionshilfsstromrichter in Waggon 4, Waggon 5 und Waggon 7, um den Betrieb zu stoppen, in einem Fall, in dem der Wechselstrom-Mittelspannungsunterbus in Waggon 3 und Waggon 4, der Wechselstrom-Mittelspannungsunterbus in Waggon 5 und Waggon 6 und der Wechselstrom-Mittelspannungsunterbus in Waggon 7 und Waggon 8 jeweils einen Fehler aufweisen;
Steuern aller Leistungsschalter, um geöffnet zu werden, und Steuern der Traktionshilfsstromrichter in Waggon 2, Waggon 5 und Waggon 7, um den Betrieb zu stoppen, in einem Fall, in dem der Wechselstrom-Mittelspannungsunterbus in Waggon 1 und Waggon 2, der Wechselstrom-Mittelspannungsunterbus in Waggon 5 und Waggon 6 und der Wechselstrom-Mittelspannungsunterbus in Waggon 7 und Waggon 8 jeweils einen Fehler aufweisen;
Steuern aller Leistungsschalter, um geöffnet zu werden, und Steuern der Traktionshilfsstromrichter in Waggon 2, Waggon 4 und Waggon 7, um den Betrieb zu stoppen, in einem Fall, in dem der Wechselstrom-Mittelspannungsunterbus in Waggon 1 und Waggon 2, der Wechselstrom-Mittelspannungsunterbus in Waggon 3 und Waggon 4 und der Wechselstrom-Mittelspannungsunterbus in Waggon 7 und Waggon 8 jeweils einen Fehler aufweisen;
Steuern aller Leistungsschalter, um geöffnet zu werden, und Steuern der Traktionshilfsstromrichter in Waggon 2, Waggon 4 und Waggon 5, um den Betrieb zu stoppen, in einem Fall, in dem der Wechselstrom-Mittelspannungsunterbus in Waggon 3 und Waggon 4, der Wechselstrom-Mittelspannungsunterbus in Waggon 5 und Waggon 6 und der Wechselstrom-Mittelspannungsunterbus in Waggon 1 und Waggon 2 jeweils einen Fehler aufweisen; und
Steuern aller Leistungsschalter, um geöffnet zu werden, und Steuern aller Traktionshilfsstromrichter, um den Betrieb zu stoppen, in einem Fall, in dem jeder der Wechselstrom-Mittelspannungsunterbusse einen Fehler aufweist.

5. System zur Steuerung eines Wechselstrom-Mittelspannungsbusses, das auf ein Hilfsstromversorgungssystem eines Hochgeschwindigkeits-Mehrfacheinheitszugs angewendet wird, wobei der Hochgeschwindigkeits-Mehrfacheinheitszug mindestens eine Waggongruppe mit jeweils acht Waggons aufweist, wobei das Hilfsstromversorgungssystem eine Vielzahl von Traktionshilfsstromrichtern, die in unterschiedlichen Waggons angeordnet sind, und eine Vielzahl von Leistungsschaltern aufweist, die zwischen der Vielzahl von Traktionshilfsstromrichtern geschaltet sind, wobei die Vielzahl von Traktionshilfsstromrichtern einen gesamten Wechselstrom-Mittelspannungsbus bilden, wobei die Vielzahl von Leistungsschaltern den gesamten Wechselstrom-Mittelspannungsbus in eine Vielzahl von Wechselstrom-Mittelspannungsunterbussen unterteilen und wobei das System zur Steuerung eines Wechselstrom-Mittelspannungsbusses ein erstes Bestimmungsmodul, ein zweites Bestimmungsmodul, ein erstes Steuermodul, ein zweites Steuermodul, ein Fehlerbestimmungsmodul und ein drittes Steuermodul aufweist, wobei
das erste Bestimmungsmodul konfiguriert ist, zu bestimmen, ob der Bus einen Kurzschlussfehler aufweist, alle Leistungsschalter zu steuern, um geschlossen zu werden, und alle Traktionshilfsstromrichter zu steuern, um in Betrieb zu gehen, wenn der Bus keinen Kurzschlussfehler aufweist, und das zweite Bestimmungsmodul auszulösen, wenn der Bus einen Kurzschlussfehler aufweist;
das zweite Bestimmungsmodul konfiguriert ist, zu bestimmen, ob einer der Traktionshilfsstromrichter einen internen Kurzschlussfehler aufweist, das erste Steuermodul auszulösen, wenn einer der Traktionshilfsstromrichter den internen Kurzschlussfehler aufweist, und das zweite Steuermodul auszulösen, wenn keiner der Traktionshilfsstromrichter den internen Kurzschlussfehler aufweist;
das erste Steuermodul konfiguriert ist, den Traktionshilfsstromrichter, der den internen Kurzschlussfehler aufweist, zu steuern, um den Betrieb zu stoppen;
wobei das System aufweist:
das zweite Steuermodul konfiguriert ist, alle Leistungsschalter zu öffnen, einen Kurzschlusstest an jedem der Wechselstrom-Mittelspannungsunterbusse durchzuführen und Informationen über einen Traktionshilfsstromrichter zu erfassen, der einen Buskurzschlussfehler meldet;
das Fehlerbestimmungsmodul konfiguriert ist, einen Wechselstrom-Mittelspannungsunterbus, der einen Fehler aufweist, basierend auf den Informationen über den Traktionshilfsstromrichter zu bestimmen, der den Buskurzschlussfehler meldet; und
das dritte Steuermodul konfiguriert ist, Betriebszustände der Leistungsschalter und Betriebszustände der Traktionshilfsstromrichter basierend auf dem bestimmten Wechselstrom-Mittelspannungsunterbus, der einen Fehler aufweist, zu steuern;
wobei die acht Waggons in der Waggongruppe von Waggon 1 bis Waggon 8 fortlaufend nummeriert sind, das Hilfsstromversorgungssystem 4 Traktionshilfsstromrichter, die jeweils in Waggon 2, Waggon 4, Waggon 5 und Waggon 7 angeordnet sind, und 3 Leistungsschalter aufweist, die zwischen den 4 Traktionshilfsstromrichtern geschaltet sind und jeweils in Waggon 3, Waggon 5 und Waggon 6 angeordnet sind, wobei das Fehlerbestimmungsmodul konfiguriert ist:
zu bestimmen, dass ein Wechselstrom-Mittelspannungsunterbus in Waggon 1 und Waggon 2 einen Fehler aufweist, in einem Fall, in dem ein Traktionshilfsstromrichter in Waggon 2 die Buskurzschlussinformationen meldet;
zu bestimmen, dass ein Wechselstrom-Mittelspannungsunterbus in Waggon 3 und Waggon 4 einen Fehler aufweist, in einem Fall, in dem ein Traktionshilfsstromrichter in Waggon 4 die Buskurzschlussinformationen meldet;
zu bestimmen, dass ein Wechselstrom-Mittelspannungsunterbus in Waggon 5 und Waggon 6 einen Fehler aufweist, in einem Fall, in dem ein Traktionshilfsstromrichter in Waggon 5 die Buskurzschlussinformationen meldet; und
zu bestimmen, dass ein Wechselstrom-Mittelspannungsunterbus in Waggon 7 und Waggon 8 einen Fehler aufweist, in einem Fall, in dem ein Traktionshilfsstromrichter in Waggon 7 die Buskurzschlussinformationen meldet.

6. System nach Anspruch 5, ferner aufweisend:
ein Lastausgleichsmodul, das konfiguriert ist, basierend auf einer Menge von in Betrieb befindlichen Traktionshilfsstromrichtern einen Teil von Wechselstromlasten der Waggongruppe schrittweise in einer aufsteigenden Reihenfolge von Prioritäten der Wechselstromlasten zu trennen, um eine von den Wechselstromlasten benötigte Leistung zu reduzieren, bis die in Betrieb befindlichen Traktionshilfsstromrichter einen Leistungsversorgungsbedarf der Wechselstromlasten der Waggongruppe erfüllen.

7. System nach Anspruch 5, wobei das zweite Bestimmungsmodul, das konfiguriert ist, zu bestimmen, ob einer der Traktionshilfsstromrichter einen internen Kurzschlussfehler aufweist, das zweite Bestimmungsmodul umfasst, das konfiguriert ist:
einen Traktionshilfsstromrichter, der Fehlerinformationen meldet, zu steuern, um den Betrieb zu stoppen, den Traktionshilfsstromrichter, der die Fehlerinformationen meldet, von den Wechselstrom-Mittelspannungsunterbussen zu trennen, und den Traktionshilfsstromrichter, der die Fehlerinformationen meldet zu steuern, um unter Verwendung eines PWM-Pulses, einen Wechselrichter des Traktionshilfsstromrichters zu starten, um zu bestimmen, ob der Traktionshilfsstromrichter den internen Kurzschlussfehler aufweist.

8. System nach Anspruch 5, wobei das dritte Steuermodul konfiguriert ist:
den Leistungsschalter in Waggon 3 zu steuern, um geöffnet zu werden, und die Leistungsschalter in Waggon 5 und Waggon 6 zu steuern, um geschlossen zu werden, und den Traktionshilfsstromrichter in Waggon 2 zu steuern, um den Betrieb zu stoppen, in einem Fall, in dem der Wechselstrom-Mittelspannungsunterbus in Waggon 1 und Waggon 2 einen Fehler aufweist;
den Leistungsschalter in Waggon 3 und Waggon 5 zu steuern, um geöffnet zu werden, und den Leistungsschalter in Waggon 6 zu steuern, um geschlossen zu werden, und den Traktionshilfsstromrichter in Waggon 4 zu steuern, um den Betrieb zu stoppen, in einem Fall, in dem der Wechselstrom-Mittelspannungsunterbus in Waggon 3 und Waggon 4 einen Fehler aufweist;
die Leistungsschalter in Waggon 5 und Waggon 6 zu steuern, um geöffnet zu werden, und den Leistungsschalter in Waggon 3 zu steuern, um geschlossen zu werden, und den Traktionshilfsstromrichter in Waggon 5 zu steuern, um den Betrieb zu stoppen, in einem Fall, in dem der Wechselstrom-Mittelspannungsunterbus in Waggon 5 und Waggon 6 einen Fehler aufweist;
den Leistungsschalter in Waggon 6 zu steuern, um geöffnet zu werden, und die Leistungsschalter in Waggon 5 und Waggon 3 zu steuern, um geschlossen zu werden, und den Traktionshilfsstromrichter in Waggon 7 zu steuern, um den Betrieb zu stoppen, in einem Fall, in dem der Wechselstrom-Mittelspannungsunterbus in Waggon 7 und Waggon 8 einen Fehler aufweist;
die Leistungsschalter in Waggon 3 und Waggon 5 zu steuern, um geöffnet zu werden, und den Leistungsschalter in Waggon 6 zu steuern, um geschlossen zu werden, und die Traktionshilfsstromrichter in Waggon 2 und Waggon 4 zu steuern, um den Betrieb zu stoppen, in einem Fall, in dem der Wechselstrom-Mittelspannungsunterbus in Waggon 1 und Waggon 2 einen Fehler aufweist und der Wechselstrom-Mittelspannungsunterbus in Waggon 3 und Waggon 4 einen Fehler aufweist;
alle Leistungsschalter zu steuern, um geöffnet zu werden, und die Traktionshilfsstromrichter in Waggon 2 und Waggon 5 zu steuern, um den Betrieb zu stoppen, in einem Fall, in dem der Wechselstrom-Mittelspannungsunterbus in Waggon 1 und Waggon 2 einen Fehler aufweist und der Wechselstrom-Mittelspannungsunterbus in Waggon 5 und Waggon 6 einen Fehler aufweist;
die Leistungsschalter in Waggon 3 und Waggon 6 zu steuern, um geöffnet zu werden, und den Leistungsschalters in Waggon 5 zu steuern, um geschlossen zu werden, und die Traktionshilfsstromrichter in Waggon 2 und Waggon 7 zu steuern, um den Betrieb zu stoppen, in einem Fall, in dem der Wechselstrom-Mittelspannungsunterbus in Waggon 1 und Waggon 2 einen Fehler aufweist und der Wechselstrom-Mittelspannungsunterbus in Waggon 7 und Waggon 8 einen Fehler aufweist;
alle Leistungsschalter zu steuern, um geöffnet zu werden, und die Traktionshilfsstromrichter in Waggon 4 und Waggon 5 zu steuern, um den Betrieb zu stoppen, in einem Fall, in dem der Wechselstrom-Mittelspannungsunterbus in Waggon 3 und Waggon 4 einen Fehler aufweist und der Wechselstrom-Mittelspannungsunterbus in Waggon 5 und Waggon 6 einen Fehler aufweist;
alle Leistungsschalter zu steuern, um geöffnet zu werden, und die Traktionshilfsstromrichter in Waggon 4 und Waggon 7 zu steuern, um den Betrieb zu stoppen, in einem Fall, in dem der Wechselstrom-Mittelspannungsunterbus in Waggon 3 und Waggon 4 einen Fehler aufweist und der Wechselstrom-Mittelspannungsunterbus in Waggon 7 und Waggon 8 einen Fehler aufweist;
die Leistungsschalter in Waggon 5 und Waggon 6 zu steuern, um geöffnet zu werden, und den Leistungsschalters in Waggon 3 zu steuern, um geschlossen zu werden, und die Traktionshilfsstromrichter in Waggon 5 und Waggon 7 zu steuern, um den Betrieb zu stoppen, in einem Fall, in dem der Wechselstrom-Mittelspannungsunterbus in Waggon 5 und Waggon 6 einen Fehler aufweist und der Wechselstrom-Mittelspannungsunterbus in Waggon 7 und Waggon 8 einen Fehler aufweist;
alle Leistungsschalter zu steuern, um geöffnet zu werden, und die Traktionshilfsstromrichter in Waggon 4, Waggon 5 und Waggon 7 zu steuern, um den Betrieb zu stoppen, in einem Fall, in dem der Wechselstrom-Mittelspannungsunterbus in Waggon 3 und Waggon 4, der Wechselstrom-Mittelspannungsunterbus in Waggon 5 und Waggon 6 und der Wechselstrom-Mittelspannungsunterbus in Waggon 7 und Waggon 8 jeweils einen Fehler aufweisen;
alle Leistungsschalter zu steuern, um geöffnet zu werden, und die Traktionshilfsstromrichter in Waggon 2, Waggon 5 und Waggon 7 zu steuern, um den Betrieb zu stoppen, in einem Fall, in dem der Wechselstrom-Mittelspannungsunterbus in Waggon 1 und Waggon 2, der Wechselstrom-Mittelspannungsunterbus in Waggon 5 und Waggon 6 und der Wechselstrom-Mittelspannungsunterbus in Waggon 7 und Waggon 8 jeweils einen Fehler aufweisen;
alle Leistungsschalter zu steuern, um geöffnet zu werden, und die Traktionshilfsstromrichter in Waggon 2, Waggon 4 und Waggon 7 zu steuern, um den Betrieb zu stoppen, in einem Fall, in dem der Wechselstrom-Mittelspannungsunterbus in Waggon 1 und Waggon 2, der Wechselstrom-Mittelspannungsunterbus in Waggon 3 und Waggon 4 und der Wechselstrom-Mittelspannungsunterbus in Waggon 7 und Waggon 8 jeweils einen Fehler aufweisen;
alle Leistungsschalter zu steuern, um geöffnet zu werden, und die Traktionshilfsstromrichter in Waggon 2, Waggon 4 und Waggon 5 zu steuern, um den Betrieb zu stoppen, in einem Fall, in dem der Wechselstrom-Mittelspannungsunterbus in Waggon 3 und Waggon 4, der Wechselstrom-Mittelspannungsunterbus in Waggon 5 und Waggon 6 und der Wechselstrom-Mittelspannungsunterbus in Waggon 1 und Waggon 2 jeweils einen Fehler aufweisen; und
alle Leistungsschalter zu steuern, um geöffnet zu werden, und alle Traktionshilfsstromrichter zu steuern, um den Betrieb zu stoppen, in einem Fall, in dem jeder der Wechselstrom-Mittelspannungsunterbusse einen Fehler aufweist.

## Revendications

1. Procédé pour commander un bus de courant alternatif de moyenne tension, appliqué à un système d'alimentation électrique auxiliaire d'un train à unités multiples à grande vitesse, le train à unités multiples à grande vitesse comprenant au moins un groupe de wagons comprenant chacun huit wagons, le système d'alimentation électrique auxiliaire comprenant une pluralité de convertisseurs auxiliaires de traction agencés dans différents wagons et une pluralité de disjoncteurs connectés entre la pluralité de convertisseurs auxiliaires de traction, la pluralité de convertisseurs auxiliaires de traction formant un bus entier de courant alternatif de moyenne tension, la pluralité de disjoncteurs divisant le bus entier de courant alternatif de moyenne tension en une pluralité de sous-bus de courant alternatif de moyenne tension, et le procédé pour commander un bus de courant alternatif de moyenne tension comprenant :
le fait de déterminer (S101) si le bus présente un défaut de court-circuit, de commander la fermeture de tous les disjoncteurs et de commander le fonctionnement de tous les convertisseurs auxiliaires de traction si le bus ne présente pas de défaut de court-circuit, et de passer à l'étape S102 si le bus présente un défaut de court-circuit ;
le fait de déterminer (S102) si l'un quelconque des convertisseurs auxiliaires de traction présente un défaut de court-circuit interne, de passer à l'étape S103 si l'un des convertisseurs auxiliaires de traction présente le défaut de court-circuit interne, et de passer à l'étape S104 si aucun des convertisseurs auxiliaires de traction ne présente le défaut de court-circuit interne ;
le fait de commander (S103) l'arrêt du fonctionnement du convertisseur auxiliaire de traction qui présente le défaut de court-circuit interne ;
le procédé incluant :
le fait d'ouvrir (S104) tous les disjoncteurs, d'exécuter un essai de court-circuit sur chacun des sous-bus de courant alternatif de moyenne tension, et d'acquérir des informations sur un convertisseur auxiliaire de traction qui signale un défaut de court-circuit de bus ;
le fait de déterminer (S105) un sous-bus de courant alternatif de moyenne tension qui présente un défaut sur la base des informations sur le convertisseur auxiliaire de traction qui signale le défaut de court-circuit de bus ;
le fait de commander (S106) les états de fonctionnement des disjoncteurs et les états de fonctionnement des convertisseurs auxiliaires de traction sur la base du sous-bus de courant alternatif de moyenne tension déterminé qui présente un défaut ;
dans lequel les huit wagons dans le groupe de wagons sont numérotés séquentiellement d'un wagon 1 à un wagon 8, le système d'alimentation électrique auxiliaire comprend 4 convertisseurs auxiliaires de traction agencés respectivement dans le wagon 2, le wagon 4, le wagon 5 et le wagon 7, et comprend 3 disjoncteurs connectés entre les 4 convertisseurs auxiliaires de traction et agencés respectivement dans le wagon 3, le wagon 5 et le wagon 6 ; et
dans lequel le fait de déterminer (S105) un sous-bus de courant alternatif de moyenne tension qui présente un défaut sur la base des informations sur le convertisseur auxiliaire de traction qui signale le défaut de court-circuit de bus comprend :
le fait de déterminer qu'un sous-bus de courant alternatif de moyenne tension dans le wagon 1 et le wagon 2 présente un défaut dans un cas où un convertisseur auxiliaire de traction dans le wagon 2 signale les informations de court-circuit de bus ;
le fait de déterminer qu'un sous-bus de courant alternatif de moyenne tension dans le wagon 3 et le wagon 4 présente un défaut dans un cas où un convertisseur auxiliaire de traction dans le wagon 4 signale les informations de court-circuit de bus ;
le fait de déterminer qu'un sous-bus de courant alternatif de moyenne tension dans le wagon 5 et le wagon 6 présente un défaut dans un cas où un convertisseur auxiliaire de traction dans le wagon 5 signale les informations de court-circuit de bus ; et
le fait de déterminer qu'un sous-bus de courant alternatif de moyenne tension dans le wagon 7 et le wagon 8 présente un défaut dans un cas où un convertisseur auxiliaire de traction dans le wagon 7 signale les informations de court-circuit de bus.

2. Procédé selon la revendication 1, après la commande de l'arrêt du fonctionnement du convertisseur auxiliaire de traction qui présente le défaut de court-circuit interne, comprenant en outre :
le fait de déconnecter (S 1031), sur la base d'une quantité de convertisseurs auxiliaires de traction en fonctionnement, une partie de charges de courant alternatif du groupe de wagons progressivement dans un ordre croissant de priorités des charges de courant alternatif pour réduire la puissance requise par les charges de courant alternatif jusqu'à ce que les convertisseurs auxiliaires de traction en fonctionnement répondent à un besoin d'alimentation électrique des charges de courant alternatif du groupe de wagons.

3. Procédé selon la revendication 1, dans lequel le fait de déterminer (S102) si l'un quelconque des convertisseurs auxiliaires de traction présente un défaut de court-circuit interne comprend :
le fait de commander l'arrêt du fonctionnement d'un convertisseur auxiliaire de traction qui signale les informations de défaut, de déconnecter le convertisseur auxiliaire de traction qui signale les informations de défaut des sous-bus de courant alternatif de moyenne tension, et de commander le convertisseur auxiliaire de traction qui signale les informations de défaut, en utilisant une impulsion PWM, pour démarrer un onduleur du convertisseur auxiliaire de traction, afin de déterminer si le convertisseur auxiliaire de traction présente le défaut de court-circuit interne.

4. Procédé selon la revendication 1, dans lequel le fait de commander (S106) les états de fonctionnement des disjoncteurs et les états de fonctionnement des convertisseurs auxiliaires de traction sur la base du sous-bus de courant alternatif de moyenne tension déterminé qui présente un défaut comprend :
le fait de commander l'ouverture du disjoncteur dans le wagon 3 et la fermeture des disjoncteurs dans le wagon 5 et le wagon 6, et de commander l'arrêt du fonctionnement du convertisseur auxiliaire de traction dans le wagon 2, dans un cas où le sous-bus de courant alternatif de moyenne tension dans le wagon 1 et le wagon 2 présente un défaut ;
le fait de commander l'ouverture des disjoncteurs dans le wagon 3 et le wagon 5 et la fermeture du disjoncteur dans le wagon 6, et de commander l'arrêt du fonctionnement du convertisseur auxiliaire de traction dans le wagon 4, dans un cas où le sous-bus de courant alternatif de moyenne tension dans le wagon 3 et le wagon 4 présente un défaut ;
le fait de commander l'ouverture des disjoncteurs dans le wagon 5 et le wagon 6 et la fermeture du disjoncteur dans le wagon 3, et de commander l'arrêt du fonctionnement du convertisseur auxiliaire de traction dans le wagon 5, dans un cas où le sous-bus de courant alternatif de moyenne tension dans le wagon 5 et le wagon 6 présente un défaut ;
le fait de commander l'ouverture du disjoncteur dans le wagon 6 et la fermeture des disjoncteurs dans le wagon 5 et le wagon 3, et de commander l'arrêt du fonctionnement du convertisseur auxiliaire de traction dans le wagon 7, dans un cas où le sous-bus de courant alternatif de moyenne tension dans le wagon 7 et le wagon 8 présente un défaut ;
le fait de commander l'ouverture des disjoncteurs dans le wagon 3 et le wagon 5 et la fermeture du disjoncteur dans le wagon 6, et de commander l'arrêt du fonctionnement des convertisseurs auxiliaires de traction dans le wagon 2 et le wagon 4, dans un cas où le sous-bus de courant alternatif de moyenne tension dans le wagon 1 et le wagon 2 présente un défaut et le sous-bus de courant alternatif de moyenne tension dans le wagon 3 et le wagon 4 présente un défaut ;
le fait de commander l'ouverture de tous les disjoncteurs, et de commander l'arrêt du fonctionnement des convertisseurs auxiliaires de traction dans le wagon 2 et le wagon 5, dans un cas où le sous-bus de courant alternatif de moyenne tension dans le wagon 1 et le wagon 2 présente un défaut et où le sous-bus de courant alternatif de moyenne tension dans le wagon 5 et le wagon 6 présente un défaut ;
le fait de commander l'ouverture des disjoncteurs dans le wagon 3 et le wagon 6 et la fermeture du disjoncteur dans le wagon 5, et de commander l'arrêt du fonctionnement des convertisseurs auxiliaires de traction dans le wagon 2 et le wagon 7, dans un cas où le sous-bus de courant alternatif de moyenne tension dans le wagon 1 et le wagon 2 présente un défaut et où le sous-bus de courant alternatif de moyenne tension dans le wagon 7 et le wagon 8 présente un défaut ;
le fait de commander l'ouverture de tous les disjoncteurs et de commander l'arrêt du fonctionnement des convertisseurs auxiliaires de traction dans le wagon 4 et le wagon 5, dans un cas où le sous-bus de courant alternatif de moyenne tension dans le wagon 3 et le wagon 4 présente un défaut et où le sous-bus de courant alternatif de moyenne tension dans le wagon 5 et le wagon 6 présente un défaut ;
le fait de commander l'ouverture de tous les disjoncteurs et de commander l'arrêt du fonctionnement des convertisseurs auxiliaires de traction dans le wagon 4 et le wagon 7, dans un cas où le sous-bus de courant alternatif de moyenne tension dans le wagon 3 et le wagon 4 présente un défaut et où le sous-bus de courant alternatif de moyenne tension dans le wagon 7 et le wagon 8 présente un défaut ;
le fait de commander l'ouverture des disjoncteurs dans le wagon 5 et le wagon 6 et la fermeture du disjoncteur dans le wagon 3, et de commander l'arrêt du fonctionnement des convertisseurs auxiliaires de traction dans le wagon 5 et le wagon 7, dans un cas où le sous-bus de courant alternatif de moyenne tension dans le wagon 5 et le wagon 6 présente un défaut et où le sous-bus de courant alternatif de moyenne tension dans le wagon 7 et le wagon 8 présente un défaut ;
le fait de commander l'ouverture de tous les disjoncteurs et de commander l'arrêt du fonctionnement des convertisseurs auxiliaires de traction dans le wagon 4, le wagon 5 et le wagon 7, dans un cas où le sous-bus de courant alternatif de moyenne tension dans le wagon 3 et le wagon 4, le sous-bus de courant alternatif de moyenne tension dans le wagon 5 et le wagon 6 et le sous-bus de courant alternatif de moyenne tension dans le wagon 7 et le wagon 8 présentent chacun un défaut ;
le fait commander l'ouverture de tous les disjoncteurs et de commander l'arrêt du fonctionnement des convertisseurs auxiliaires de traction dans le wagon 2, le wagon 5 et le wagon 7, dans un cas où le sous-bus de courant alternatif de moyenne tension dans le wagon 1 et le wagon 2, le sous-bus de courant alternatif de moyenne tension dans le wagon 5 et le wagon 6 et le sous-bus de courant alternatif de moyenne tension dans le wagon 7 et le wagon 8 présentent chacun un défaut ;
le fait de commander l'ouverture de tous les disjoncteurs et de commander l'arrêt du fonctionnement des convertisseurs auxiliaires de traction dans le wagon 2, le wagon 4 et le wagon 7, dans un cas où le sous-bus de courant alternatif de moyenne tension dans le wagon 1 et le wagon 2, le sous-bus de courant alternatif de moyenne tension dans le wagon 3 et le wagon 4 et le sous-bus de courant alternatif de moyenne tension dans le wagon 7 et le wagon 8 présentent chacun un défaut ;
le fait de commander l'ouverture de tous les disjoncteurs et de commander l'arrêt du fonctionnement des convertisseurs auxiliaires de traction dans le wagon 2, le wagon 4 et le wagon 5, dans un cas où le sous-bus de courant alternatif de moyenne tension dans le wagon 3 et le wagon 4, le sous-bus de courant alternatif de moyenne tension dans le wagon 5 et le wagon 6 et le sous-bus de courant alternatif de moyenne tension dans le wagon 1 et le wagon 2 présentent chacun un défaut ; et
le fait de commander l'ouverture de tous les disjoncteurs et de commander l'arrêt du fonctionnement de tous les convertisseurs auxiliaires de traction dans un cas où chacun des sous-bus de courant alternatif de moyenne tension présente un défaut.

5. Système pour commander un bus à courant alternatif de moyenne tension, appliqué à un système d'alimentation électrique auxiliaire d'un train à unités multiples à grande vitesse, le train à unités multiples à grande vitesse comprenant au moins un groupe de wagons comprenant chacun huit wagons, le système d'alimentation électrique auxiliaire comprenant une pluralité de convertisseurs auxiliaires de traction agencés dans différents wagons et une pluralité de disjoncteurs connectés entre la pluralité de convertisseurs auxiliaires de traction, la pluralité de convertisseurs auxiliaires de traction formant un bus entier de courant alternatif de moyenne tension, la pluralité de disjoncteurs divisant le bus entier de courant alternatif de moyenne tension en plusieurs sous-bus de courant alternatif de moyenne tension, et le système pour commander un bus de courant alternatif de moyenne tension comprenant un premier module de détermination, un deuxième module de détermination, un premier module de commande, un deuxième module de commande, un module de détermination de défaut et un troisième module de commande, dans lequel
le premier module de détermination est configuré pour déterminer si le bus présente un défaut de court-circuit, commander la fermeture de tous les disjoncteurs et commander le fonctionnement de tous les convertisseurs auxiliaires de traction si le bus ne présente pas de défaut de court-circuit, et déclencher le deuxième module de détermination si le bus présente un défaut de court-circuit ;
le deuxième module de détermination est configuré pour déterminer si l'un quelconque des convertisseurs auxiliaires de traction présente un défaut de court-circuit interne, déclencher le premier module de commande si l'un des convertisseurs auxiliaires de traction présente le défaut de court-circuit interne, et déclencher le deuxième module de commande si aucun des convertisseurs auxiliaires de traction ne présente le défaut de court-circuit interne ;
le premier module de commande est configuré pour commander l'arrêt du fonctionnement du convertisseur auxiliaire de traction qui présente le défaut de court-circuit interne ;
dans lequel le système inclut :
le deuxième module de commande est configuré pour ouvrir tous les disjoncteurs, exécuter un essai de court-circuit sur chacun des sous-bus de courant alternatif de moyenne tension et acquérir des informations sur un convertisseur auxiliaire de traction qui signale un défaut de court-circuit de bus ;
le module de détermination de défaut est configuré pour déterminer un sous-bus de courant alternatif de moyenne tension qui présente un défaut sur la base des informations relatives au convertisseur auxiliaire de traction qui signale le défaut de court-circuit du bus ; et
le troisième module de commande est configuré pour commander les états de fonctionnement des disjoncteurs et les états de fonctionnement des convertisseurs auxiliaires de traction sur la base du sous-bus de courant alternatif de moyenne tension déterminé qui présente un défaut ;
dans lequel les huit wagons dans le groupe de wagons sont numérotés séquentiellement d'un wagon 1 à un wagon 8, le système d'alimentation électrique auxiliaire comprend 4 convertisseurs auxiliaires de traction agencés respectivement dans le wagon 2, le wagon 4, le wagon 5 et le wagon 7, et comprend 3 disjoncteurs connectés entre les 4 convertisseurs auxiliaires de traction et agencés respectivement dans le wagon 3, le wagon 5 et le wagon 6, dans lequel le module de détermination de défaut est configuré pour :
déterminer qu'un sous-bus de courant alternatif de moyenne tension dans le wagon 1 et le wagon 2 présente un défaut dans un cas où un convertisseur auxiliaire de traction dans le wagon 2 signale les informations de court-circuit du bus ;
déterminer qu'un sous-bus de courant alternatif de moyenne tension dans le wagon 3 et le wagon 4 présente un défaut dans un cas où un convertisseur auxiliaire de traction dans le wagon 4 signale les informations de court-circuit de bus ;
déterminer qu'un sous-bus de courant alternatif de moyenne tension dans le wagon 5 et le wagon 6 présente un défaut dans un cas où un convertisseur auxiliaire de traction dans le wagon 5 signale les informations de court-circuit de bus ; et
déterminer qu'un sous-bus de courant alternatif de moyenne tension dans le wagon 7 et le wagon 8 présente un défaut dans un cas où un convertisseur auxiliaire de traction dans le wagon 7 signale les informations de court-circuit de bus.

6. Système selon la revendication 5, comprenant en outre :
un module d'équilibrage de charges configuré pour déconnecter, sur la base d'une quantité de convertisseurs auxiliaires de traction en fonctionnement, une partie de charges de courant alternatif du groupe de wagons progressivement dans un ordre croissant de priorités des charges de courant alternatif pour réduire la puissance requise par les charges de courant alternatif jusqu'à ce que les convertisseurs auxiliaires de traction en fonctionnement répondent à un besoin d'alimentation électrique des charges de courant alternatif du groupe de wagons.

7. Système selon la revendication 5, dans lequel le deuxième module de détermination qui est configuré pour déterminer si l'un quelconque des convertisseurs auxiliaires de traction présente un défaut de court-circuit interne comprend le deuxième module de détermination qui est configuré pour :
commander l'arrêt du fonctionnement un convertisseur auxiliaire de traction qui signale des informations de défaut, déconnecter le convertisseur auxiliaire de traction qui signale les informations de défaut des sous-bus de courant alternatif de moyenne tension, et commander le convertisseur auxiliaire de traction qui signale les informations de défaut, en utilisant une impulsion PWM, pour démarrer un onduleur du convertisseur auxiliaire de traction, afin de déterminer si le convertisseur auxiliaire de traction présente le défaut de court-circuit interne.

8. Système selon la revendication 5, dans lequel le troisième module de commande est configuré pour :
commander l'ouverture du disjoncteur dans le wagon 3 et la fermeture des disjoncteurs dans le wagon 5 et le wagon 6, et commander l'arrêt du fonctionnement du convertisseur auxiliaire de traction dans le wagon 2, dans un cas où le sous-bus de courant alternatif de moyenne tension dans le wagon 1 et le wagon 2 présente un défaut ;
commander l'ouverture des disjoncteurs dans le wagon 3 et le wagon 5 et la fermeture du disjoncteur dans le wagon 6, et commander l'arrêt du fonctionnement du convertisseur auxiliaire de traction dans le wagon 4, dans un cas où le sous-bus de courant alternatif de moyenne tension dans le wagon 3 et le wagon 4 présente un défaut ;
commander l'ouverture des disjoncteurs dans le wagon 5 et le wagon 6 et la fermeture du disjoncteur dans le wagon 3, et commander l'arrêt du fonctionnement du convertisseur auxiliaire de traction dans le wagon 5, dans un cas où le sous-bus de courant alternatif de moyenne tension dans le wagon 5 et le wagon 6 présente un défaut ;
commander l'ouverture du disjoncteur dans le wagon 6 et la fermeture des disjoncteurs dans le wagon 5 et le wagon 3, et commander l'arrêt du fonctionnement du convertisseur auxiliaire de traction dans le wagon 7, dans un cas où le sous-bus de courant alternatif de moyenne tension dans le wagon 7 et le wagon 8 présente un défaut ;
commander l'ouverture des disjoncteurs dans le wagon 3 et le wagon 5 et la fermeture du disjoncteur dans le wagon 6, et commander l'arrêt du fonctionnement des convertisseurs auxiliaires de traction dans le wagon 2 et le wagon 4, dans un cas où le sous-bus de courant alternatif de moyenne tension dans le wagon 1 et le wagon 2 présente un défaut et le sous-bus de courant alternatif de moyenne tension dans le wagon 3 et le wagon 4 présente un défaut ;
commander l'ouverture de tous les disjoncteurs, et commander l'arrêt du fonctionnement des convertisseurs auxiliaires de traction dans le wagon 2 et le wagon 5, dans un cas où le sous-bus de courant alternatif de moyenne tension dans le wagon 1 et le wagon 2 présente un défaut et où le sous-bus de courant alternatif de moyenne tension dans le wagon 5 et le wagon 6 présente un défaut ;
commander l'ouverture des disjoncteurs dans le wagon 3 et le wagon 6 et la fermeture du disjoncteur dans le wagon 5, et commander l'arrêt du fonctionnement des convertisseurs auxiliaires de traction dans le wagon 2 et le wagon 7, dans un cas où le sous-bus de courant alternatif de moyenne tension dans le wagon 1 et le wagon 2 présente un défaut et où le sous-bus de courant alternatif de moyenne tension dans le wagon 7 et le wagon 8 présente un défaut ;
commander l'ouverture de tous les disjoncteurs, et commander l'arrêt du fonctionnement des convertisseurs auxiliaires de traction dans le wagon 4 et le wagon 5, dans un cas où le sous-bus de courant alternatif de moyenne tension dans le wagon 3 et le wagon 4 présente un défaut et où le sous-bus de courant alternatif de moyenne tension dans le wagon 5 et le wagon 6 présente un défaut ;
commander l'ouverture de tous les disjoncteurs, et commander l'arrêt du fonctionnement des convertisseurs auxiliaires de traction dans le wagon 4 et le wagon 7, dans un cas où le sous-bus de courant alternatif de moyenne tension dans le wagon 3 et le wagon 4 présente un défaut, et où le sous-bus de courant alternatif de moyenne tension dans le wagon 7 et le wagon 8 présente un défaut ;
commander l'ouverture des disjoncteurs dans le wagon 5 et le wagon 6 et la fermeture du disjoncteur dans le wagon 3, et commander l'arrêt du fonctionnement des convertisseurs auxiliaires de traction dans le wagon 5 et le wagon 7, dans un cas où le sous-bus de courant alternatif de moyenne tension dans le wagon 5 et le wagon 6 présente un défaut et où le sous-bus de courant alternatif de moyenne tension dans le wagon 7 et le wagon 8 présente un défaut ;
commander l'ouverture de tous les disjoncteurs, et commander l'arrêt du fonctionnement des convertisseurs auxiliaires de traction dans le wagon 4, le wagon 5 et le wagon 7, dans un cas où le sous-bus de courant alternatif de moyenne tension dans le wagon 3 et le wagon 4, le sous-bus de courant alternatif de moyenne tension dans le wagon 5 et le wagon 6 et le sous-bus de courant alternatif de moyenne tension dans le wagon 7 et le wagon 8 présentent chacun un défaut ;
commander l'ouverture de tous les disjoncteurs, et commander l'arrêt du fonctionnement des convertisseurs auxiliaires de traction dans le wagon 2, le wagon 5 et le wagon 7, dans un cas où le sous-bus de courant alternatif de moyenne tension dans le wagon 1 et le wagon 2, le sous-bus de courant alternatif de moyenne tension dans le wagon 5 et le wagon 6 et le sous-bus de courant alternatif de moyenne tension dans le wagon 7 et le wagon 8 présentent chacun un défaut ;
commander l'ouverture de tous les disjoncteurs, et commander l'arrêt du fonctionnement des convertisseurs auxiliaires de traction dans le wagon 2, le wagon 4 et le wagon 7, dans un cas où le sous-bus de courant alternatif de moyenne tension dans le wagon 1 et le wagon 2, le sous-bus de courant alternatif de moyenne tension dans le wagon 3 et le wagon 4 et le sous-bus de courant alternatif de moyenne tension dans le wagon 7 et le wagon 8 présentent chacun un défaut ;
commander l'ouverture de tous les disjoncteurs, et commander l'arrêt du fonctionnement des convertisseurs auxiliaires de traction dans le wagon 2, le wagon 4 et le wagon 5, dans un cas où le sous-bus de courant alternatif de moyenne tension dans le wagon 3 et le wagon 4, le sous-bus de courant alternatif de moyenne tension dans le wagon 5 et le wagon 6 et le sous-bus de courant alternatif de moyenne tension dans le wagon 1 et le wagon 2 présentent chacun un défaut ; et
commander l'ouverture de tous les disjoncteurs et commander l'arrêt du fonctionnement de tous les convertisseurs auxiliaires de traction dans un cas où chacun des sous-bus à courant alternatif de moyenne tension présente un défaut.
